# EUROPEAN PATENT SPECIFICATION

(11) **EP 1 522 554 B1**
(45) Date of publication and mention of the grant of the patent: **22.11.2006**
(21) Application number: 04256195.1
(22) Date of filing: 07.10.2004
(51) Int. Cl.: C08L 59/00, C08K 5/3445, C08L 59/02, C08L 59/04

(54) **Polyacetal resin composition and shaped article thereof**
Polyacetalharzzusammensetzung und daraus geformter Körper
Résine polyacétale et article formé à partir de cette composition

(30) Priority: 07.10.2003 JP 2003348765
(43) Date of publication of application: 13.04.2005
(73) Proprietor: Polyplastics Co., Ltd., Tokyo 108-8280 (JP)
(72) Inventor: Harashina, Hatsuhiko, Fuji-shi Shizuoka 416-8533 (JP); Kurita, Hayato, Fuji-shi Shizuoka 416-8533 (JP)
(74) Representative: Peel, James Peter

(56) References cited:
- EP-A- 0 955 337
- EP-A- 1 270 629
- US-A- 4 731 397

## Description

### FIELD OF THE INVENTION

The present invention relates to a polyacetal resin composition having excellent processability and stability and being effectively inhibited from emitting (or generating) formaldehyde, to a process of producing the same, and to shaped or molded articles formed from the resin composition.

### BACKGROUND OF THE INVENTION

A polyacetal resin is unstable in an oxidative atmosphere at an elevated temperature or in an acidic or alkaline environment because of its chemical structure. Therefore, the need that must be fulfilled for a polyacetal resin is that of insuring high thermal stability and minimal emission (or generation) of formaldehyde in the course of processing and from shaped articles. In the case of having low thermal stability, a polymer of a polyacetal resin is decomposed or resolved by heating during a processing step such as extruding or molding, as a result formation or generation of a deposit on a mold (mold deposit) occurs, and the moldability, the mechanical property and others are deteriorated. Formaldehyde generated from decomposition or resolution of a polyacetal resin is chemically active and ready to be oxidized to formic acid to thereby adversely affect the heat resistance of resin. When the resin is used as electrical or electronic parts, formaldehyde generated from the resin causes corrosion of metallic contacts or their discoloration due to organic deposits, resulting in contact errors. Furthermore, formaldehyde as such contaminates the working environment for parts assembling and the ecology in the field of use of end products.

Therefore, in order to stabilize a polyacetal resin, an antioxidant or other stabilizer has been used. As the antioxidant added to the polyacetal resin, a phenol-series (phenolic) compound having steric hindrance (hindered phenol), an amine compound having steric hindrance (hindered amine), and others have been known. As other stabilizers, melamine, a polyamide, an alkaline metal hydroxide, an alkaline earth metal hydroxide, and others have been used. Moreover, antioxidants are generally used in combination with other stabilizers. However, it is difficult to reduce the amount of formaldehyde emission (or generation), in particular the amount of formaldehyde emitted (or generated) from a shaped article, when such additive(s) and a polyacetal resin having a general formaldehyde quality are used.

Further, with the view of resolving the above problems, various polyacetal resin compositions have been disclosed to reduce the amount of formaldehyde emission. For example, the following compositions have been disclosed: (1) a polyacetal resin composition comprising a polyacetal resin and a glyoxydiureide compound [Japanese Patent Application Laid-Open No. 182928/1998 (JP-10-182928A)]; (2) a polyacetal resin composition comprising a polyacetal resin and a cyclic nitrogen-containing compound (glycocyamidine or a derivative thereof, such as creatinine) [Japanese Patent Application Laid-Open No. 335518/1999 (JP-11-335518A)]; (3) a polyacetal resin composition comprising a polyacetal resin, at least one processing stabilizer selected from the group consisting of a polyalkylene glycol, a fatty acid ester, a fatty acid amide and a metal salt of a fatty acid, and at least one inhibitor selected from the group consisting of urea or a derivative thereof and an amidine derivative [Japanese Patent Application Laid-Open No. 26704/2000 (JP-2000-26704A)]; (4) a polyacetal resin composition comprising a polyacetal resin, a core-shell polymer having a soft polymer as a core and a hard polymer as a shell, and at least one inhibitor selected from the group consisting of urea or a derivative thereof and an amidine derivative [Japanese Patent Application Laid-Open No. 26705/2000 (JP-2000-26705A)]; (5) a polyacetal resin composition in which a polyacetal resin particulate, and an inhibitor comprising at least one active hydrogen-containing compound selected from the group consisting of a urea compound and an amidine compound coexist [Japanese Patent Application Laid-Open No. 44769/2000 (JP-2000-44769A)]; (6) a polyacetal resin composition comprising a polyacetal resin, and a carboxyl group-containing compound having a pKa of not less than 3.6 [Japanese Patent Application Laid-Open No. 239484/2000 (JP-2000-239484A)]; (7) a polyacetal resin composition comprising a polyacetal resin, an ionomer resin, and at least one inhibitor selected from the group consisting of urea or a derivative thereof and an amidine derivative [Japanese Patent Application Laid-Open No. 239485/2000 (JP-2000-239485A)]; (8) a polyacetal-series resin composition comprising a polyacetal-series resin, and a modified phenol resin (a condensed product of a phenol compound, a basic nitrogen-containing compound and an aldehyde compound) [Japanese Patent Application Laid-Open No. 212384/2002 (JP-2002-212384A)]; (9) a polyacetal resin composition comprising a polyacetal resin, a hindered phenol-series compound, a spiro-compound having a triazine ring, and at least one member selected from the group consisting of a processing stabilizer and a heat stabilizer [Japanese Patent Application Laid-Open No. 113289/2003 (JP-2003-113289A)]; and others.

EP 0 955 337 A1 discloses a polyacetal resin composition containing about 0.01-10 parts by weight of a glyoxyldiureide compound per 100 parts by weight of polyacetal resin.

However, even in the case of using these polyacetal resin compositions described in these documents, it is difficult to remarkably reduce the amount of formaldehyde emission, in particular the amount of formaldehyde emitted (or generated) from a shaped article.

### SUMMARY OF THE INVENTION

It is therefore an object of the present invention to provide a polyacetal resin composition adopted to inhibit emission of formaldehyde to an extremely low level, and a process for producing the same, as well as an article shaped (or molded) therefrom.

It is another object of the present invention to provide a polyacetal resin composition adapted to inhibit emission of formaldehyde significantly even under severe conditions and to suppress deposition of decomposition product(s) or additive(s) on a mold (mold deposit) and blooming or bleeding of resin decomposition product (s) or additive (s) from a shaped article (blooming property), and a process for producing the same, as well as an article shaped (or molded) therefrom.

It is a further object of the present invention to provide a polyacetal resin composition adapted to inhibit emission of formaldehyde significantly, and, in addition, increased in a property such as weather (light)-resistance or impact resistance, and a process for producing the same, as well as an article shaped (or molded) therefrom.

The inventors of the present invention made systematic investigation on addition of a formaldehyde emission inhibitor to polyacetal copolymers having various formaldehyde indexes to achieve the above objects and finally revealed that a polyacetal resin was significantly inhibited from formaldehyde emission by using a polyacetal copolymer having a specific index of formaldehyde emission and a specific formaldehyde emission inhibitor in combination.

More specifically, in the case of using a polyacetal copolymer having a conventional formaldehyde quality and a formaldehyde emission inhibitor, formaldehyde is trapped by a reaction with the formaldehyde emission inhibitor. However, it is proved that free formaldehyde is present and formaldehyde is detached from the reaction product of formaldehyde trapped by the formaldehyde emission inhibitor, generated in a extruding and shaping (or molding) process (that is, the inverse reaction occurs), and as a result, that a shaped article formed from the composition is increased in the amount of formaldehyde emission compared with a shaped article formed from a composition containing no formaldehyde-trapping agent, far from being reduced in the amount of formaldehyde emission. The inventors of the present invention made intensive studies to achieve the above objects and finally found that a combination use of a polyacetal copolymer having a specific excellent formaldehyde index and a formaldehyde emission inhibitor drastically decreases an amount of free formaldehyde remaining in the resin without trapping, reduces contribution of the elimination reaction of formaldehyde trapped by the formaldehyde emission inhibitor, and significantly decreases the amount of formaldehyde emitted from the shaped article. The present invention was accomplished based on the above findings.

That is, the polyacetal resin composition of the present invention comprises a polyacetal copolymer and a formaldehyde emission inhibitor. The polyacetal copolymer has a terminal hemiformal group of not more than 1 mmol/kg, a terminal formyl group of not more than 2 mmol/kg, and a melt index of 0.1 to 100 g/10 min. The molar ratio of the terminal hemiformal group relative to the terminal formyl group may be about 100/0 to 5/95. Moreover, in the polyacetal copolymer, the amount of an unstable terminal group may be not more than 0.5% by weight. The typical polyacetal copolymer may include a polyacetal copolymer having the terminal hemiformal group of 0.05 to 0.8 mmol/kg, the terminal formyl group of 0 to 1.5 mmol/kg, the molar ratio of the terminal hemiformal group relative to the terminal formyl group of 100/0 to 10/90, the unstable terminal group of 0.01 to 0.4% by weight, and the melt index of 0.5 to 80 g/10 min. The preferred polyacetal copolymer may include a polyacetal copolymer having the terminal hemiformal group of 0.05 to 0. 6 mmol/kg, the terminal formyl group of 0 to 1.0 mmol/kg, the molar ratio of the terminal hemiformal group relative to the terminal formyl group of 90/10 to 15/85, the unstable terminal group of 0.01 to 0.3% by weight, and the melt index of 0.5 to 60 g/10 min. The more preferred polyacetal copolymer may include a polyacetal copolymer having the terminal hemiformal group of 0.05 to 0.5 mmol/kg, the terminal formyl group of 0 to 0.8 mmol/kg, the molar ratio of the terminal hemiformal group relative to the terminal formyl group of 85/15 to 15/85, the unstable terminal group of 0.01 to 0.25% by weight, and the melt index of 1.0 to 50 g/10 min.

The formaldehyde emission inhibitor may comprise at least one compound having an active hydrogen atom and selected from the group consisting of a basic nitrogen-containing compound, an active methylene group-containing compound, and a polyphenol compound, and in particular may comprise at least one basic nitrogen-containing compound selected from the group consisting of an aminotriazine compound (or aminotriazine-series compound), a guanidine compound (or guanidine-series compound), a urea compound (or urea-series compound), a hydrazine compound (or hydrazine-series compound), an amino acid compound (or amino acid-series compound), an amino alcohol compound (or amino alcohol-series compound), an imide compound (or imide-series compound), and an amide compound (or amide-series compound). Preferably, the formaldehyde emission inhibitor may comprise at least one basic nitrogen-containing compound selected from the group consisting of a guanamine-series compound, a linear urea compound, a cyclic urea compound, a carboxylic acid hydrazide-series compound, an α-, β-, γ-, or δ- amino acid, a polyamide-series resin, and a poly(meth)acrylic acid amide-series resin (or a poly(meth)acrylamide-series resin). Moreover, the formaldehyde emission inhibitor may comprise at least one member selected from the group consisting of a guanamine-series compound, a linear urea compound, a cyclic urea compound, and a carboxylic acid hydrazide-series compound; and at least one member selected from the group consisting of a polyamide-series resin and a poly(meth)acrylic acid amide-series resin. The proportion of the formaldehyde emission inhibitor is about 0.001 to 20 parts by weight relative to 100 parts by weight of the polyacetal copolymer.

The polyacetal resin composition of the present invention may further comprise at least one stabilizer selected from the group consisting of an antioxidant, a processing stabilizer, a heat stabilizer, and a weather-resistant stabilizer. For example, the antioxidant may comprise at least one member selected from the group consisting of a hindered phenol-series compound and a hindered amine-series compound. The processing stabilizer may comprise at least one member selected from the group consisting of a long-chain fatty acid or a derivative thereof (e.g., a fatty acid ester, and a fatty acid amide), a polyoxyalkylene glycol, and a silicone-series compound. The heat stabilizer may comprise at least one member selected from the group consisting of a phosphine-series compound, an organic carboxylic acid or a metal salt thereof, an alkaline or alkaline earth metal compound, a hydrotalcite, and a zeolite. The weather-resistant stabilizer may comprise at least one member selected from the group consisting of a benzotriazole-series compound, a benzophenone-series compound, an aromatic benzoate-series compound, a cyanoacrylate-series compound, an oxalic anilide-series compound, a hydroxyphenyl-1,3,5-triazine-series compound, and a hindered amine-series compound.

Incidentally, the polyacetal copolymer may be a copolymer which has contained at least one member selected from the group consisting of a basic nitrogen-containing compound, a hindered phenol-series compound, a hindered amine-series compound, a processing stabilizer, and a heat stabilizer.

The representative polyacetal resin composition of the present invention includes a resin composition comprising
the polyacetal copolymer having the terminal hemiformal group of not more than 0.8 mmol/kg (preferably not more than 0.6 mmol/kg, and more preferably not more than 0.5 mmol/kg), the terminal formyl group of not more than 1.5 mmol/kg (preferably not more than 1.0 mmol/kg, and more preferably not more than 0 . 8 mmol/kg), the unstable terminal group of not more than 0.4% by weight (preferably not more than 0.3% by weight, and more preferably not more than 0.25% by weight) and the melt index of 0.5 to 80 g/10 min. (preferably 1.0 to 60 g/10 min., and more preferably 1.0 to 50 g/10 min.),
a formaldehyde emission inhibitor,
a hindered phenol-series compound and/or a hindered amine-series compound,
a processing stabilizer, and
a heat stabilizer, and
wherein, relative to 100 parts by weight of the polyacetal copolymer, the proportion of the formaldehyde emission inhibitor is 0. 01 to 10 parts by weight (preferably 0.02 to 5 parts by weight, and more preferably 0.02 to 2 parts by weight), the proportion of the hindered phenol-series compound and/or the hindered amine-series compound is 0.005 to 3 parts by weight (preferably 0.01 to 2 parts by weight), the proportion of the processing stabilizer is 0.01 to 5 parts by weight (preferably 0.03 to 3 parts by weight) and the proportion of the heat stabilizer is 0.001 to 5 parts by weight (preferably 0.01 to 2 parts by weight).

The polyacetal resin composition of the present invention may further comprise at least one member selected from the group consisting of an impact resistance improver or a gloss reducing agent (e.g., at least one member selected from the group consisting of a thermoplastic polyester, a thermoplastic polyurethane, and an acrylic core-shell polymer), an agent for improving sliding property (slide improver) (e.g., at least one member selected from the group consisting of an olefinic polymer, a silicone-series resin, and a fluorine-containing resin), a coloring agent, and a filler.

Incidentally, in the polyacetal resin composition, a pellet of the polyacetal copolymer may coexist with the formaldehyde emission inhibitor or a master batch containing the formaldehyde emission inhibitor.

The polyacetal resin composition of the present invention may be produced by mixing the polyacetal copolymer with a formaldehyde emission inhibitor. For example, the polyacetal resin composition may be produced by (i) a process which comprises melt-mixing the polyacetal copolymer and the formaldehyde emission inhibitor by using an extruder having an exhaust port, and in the melt-mixing process, at least one processing auxiliary selected from the group consisting of water and an alcohol is added to the mixture and a volatile component is exhausted through the exhaust port; (ii) a process which comprises melt-mixing the polyacetal copolymer and the formaldehyde emission inhibitor by using an extruder having an exhaust port, and in the melt-mixing step, part or all of the formaldehyde emission inhibitor is fed to the middle part of the extruder; and (iii) a process which comprises melt-mixing (or melt-kneading) the polyacetal copolymer and at least one formaldehyde emission inhibitor selected from the group consisting of a urea compound and a hydrazide-series compound by using an extruder, and wherein the melt-mixing time (or melt-kneading time) is not more than 300 seconds.

The present invention includes a shaped article of a polyacetal resin formed from the polyacetal resin composition (for example, at least one article selected from the group consisting of an automotive part, an electric or electronic device part, an architectural or pipeline part, a household utensil or cosmetic article part, and a medical device part). The shaped article of the polyacetal resin of the present invention minimizes formaldehyde emission. For example, (1) the emission of formaldehyde from the shaped article which is maintained in a closed space for 24 hours at a temperature of 80°C is not more than 0.1 µg (particular 0.005 to 0.09 µg) per one cm² of the surface area of the article, and/or (2) the emission of formaldehyde from the shaped article which is maintained in a closed space for 3 hours at a temperature of 60°C under a saturated humidity is not more than 0.2 µg (particularly 0.005 to 0.1 µg) per one cm² of the surface area of the shaped article.

### DETAILED DESCRIPTION OF THE INVENTION

The resin composition of the present invention comprises a polyacetal copolymer having a polymer characteristic represented by a specific index, and a formaldehyde emission inhibitor (hereinafter, sometimes simply referred to as an inhibitor).

### (Polyacetal copolymer)

The polyacetal copolymer used in the present invention has the following three indexes in a specific proportion: the amount of a terminal hemiformal group, the amount of a terminal formyl group, and the melt index (or melt flow rate). Incidentally, in the specification, the term "terminal hemiformal group" means a hydroxymethoxy group (-OCH₂OH) located in an end (or a side chain) of a polyacetal copolymer, and is identical with the term "terminal hemiacetal group".

The amount of the terminal hemiformal group is not more than 1 mmol (e.g., about 0.01 to 1 mmol), preferably not more than 0.8 mmol (e.g. , about 0.05 to 0.8 mmol), more preferably not more than 0.6 mmol (e.g., about 0.05 to 0.6 mmol) and particularly not more than 0.5 mmol (e.g., about 0.05 to 0.5 mmol), relative to 1 kg of the polyacetal copolymer. Incidentally, the amount of the terminal hemiformal group may be usually determined by a ¹H-NMR measurement, and quantitatively determined by using a method described in Japanese Patent Application Laid-Open No. 11143/2001 (JP-2001-11143A), or others.

The amount of the terminal formyl group is not more than 2 mmol (e.g., about 0 to 2 mmol), preferably not more than 1.5 mmol (e.g., about 0 to 1.5 mmol), more preferably not more than 1.0 mmol (e.g., about 0 to 1.0 mmol) and particularly not more than 0.8 mmol (e.g., about 0 to 0.8 mmol), relative to 1 kg of the polyacetal copolymer. Incidentally, the amount of the terminal formyl group (HCO-) may be determined as an amount of a terminal formyloxy group (HCOO-) by a ¹H-NMR measurement as in the case of the terminal hemiformal group, and quantitatively determined simultaneously with that of the terminal hemiformal group by using a method described in Japanese Patent Application Laid-Open No. 11143/2001 (JP-2001-11143A), or others.

The proportion (molar ratio) of the terminal hemiacetal group relative to the terminal formyl group (that is, the proportion of the amount of the terminal hemiacetal group relative to that of the terminal formyl group) [the former/the latter] is about 100/0 to 5/95, preferably about 100/0 to 10/90, more preferably about 90/10 to 15/85 and particularly about 85/15 to 15/85, in many cases.

The melt index (melt flow rate) is, for example, about 0.1 to 100 g/10 min., preferably about 0.5 to 80 g/10 min., and more preferably about 1.0 to 60 g/10 min. (in particular, about 1.0 to 50 g/10 min.).

The polyacetal copolymer may have a value in the specific range in at least the above three indexes, and may further have a specific amount in the content of an unstable terminal group. The amount of the unstable terminal group is not more than 0.5% by weight (e.g., about 0.01 to 0.5% by weight), preferably not more than 0.4% by weight (e.g., about 0.01 to 0.4% by weight), more preferably not more than 0.3% by weight (e.g., about 0.01 to 0.3% by weight) and particularly not more than 0.25% by weight (e.g., about 0.01 to 0.25% by weight), relative to the total amount of the polyacetal copolymer. Incidentally, the amount of the unstable terminal group is an index regarding polymer quality, and represented as the percentage (% by weight) relative to a polyacetal copolymer based on the following manner: putting 1 g of the polyacetal copolymer and 100 ml of 50% (by volume) methanol aqueous solution containing 0.5% (by volume) of ammonium hydroxide in a pressure tight and airtight container, heat-treating the mixture solution at 180°C for 45 minutes, then cooling and opening the container, and quantitatively determining the amount of formaldehyde dissolved and eluted in the resulting solution.

The polyacetal copolymer is a copolymer containing an oxymethylene group (-OCH₂-) as a main constitutional unit, and a comonomer unit other than the oxymethylene group.

In the copolymer, the comonomer unit includes an oxyalkylene unit of about 2 to 6 carbon atoms (preferably about 2 to 4 carbon atoms), for example, oxyethylene group (-CH₂CH₂O-), oxypropylene group, and oxytetramethylene group. The content of the comonomer unit may be small and may be selected from the range of about 0.01 to 20 mol%, preferably about 0.03 to 15 mol% (e.g. 0.05 to 10 mol%), and more preferably about 0.1 to 8 mol%, relative to the whole units constituting the polyacetal copolymer.

The polyacetal copolymer may for example be a copolymer containing two components, a copolymer containing three components (terpolymer) and so on. The polyacetal copolymer may also be a random copolymer, a block copolymer, a graft copolymer, and others. Moreover, the polyacetal copolymer may have a linear (or straight) structure or branched structure, and may have a crosslinked structure. In addition, concerning the polyacetal copolymer, there is no particular limitation on the degree of polymerization, the degree of branching, or the degree of crosslinking, only provided it can be melt-molded.

The polyacetal copolymer may be produced by polymerizing an oxymethylene group-forming monomer, such as an aldehyde (e.g., formaldehyde and paraformaldehyde) or a cyclic ether (e.g., trioxane), and a copolymerizable component. The copolymerizable component may include a cyclic ether such as ethylene oxide, propylene oxide, butylene oxide, styrene oxide, cyclohexene oxide or 1, 3-dioxolan, and a cyclic formal such as diethylene glycol formal or 1,4-butanediol formal. Further, as the copolymerizable component, an alkyl- or arylglycidyl ether (e.g., methylglycidyl ether, ethylglycidyl ether, phenylglycidyl ether, naphthylglycidyl ether), an alkylene or polyoxyalkylene glycol diglycidyl ether (e.g., ethylene glycol diglycidyl ether, triethylene glycol diglycidyl ether, butanediol diglycidyl ether), an alkyl- or aryl glycidyl alcohol, a cyclic ester (e.g., β-propiolactone), or a vinyl compound (e.g., styrene, and vinyl ether) may be employed. These copolymerizable components may be used singly or in combination.

The process for producing the polyacetal copolymer of the present invention is not particularly limited to a specific one as far as a polyacetal copolymer showing at least the amount of the terminal hemiformal group, the amount of the terminal formyl group, and the melt index (preferably further the amount of the unstable terminal group) as final polymer characteristic indexes can be produced. The polyacetal copolymer of the present invention is usually produced by reducing impurities (e. g. , water, methanol, and formic acid) in a polymerizable component (a monomer constituting an oxymethylene group, and a copolymerizable component), particularly, reducing the water content in the polymerizable component to not more than 20 ppm and particularly not more than 10 ppm, and selecting the production process and optimizing the producing condition, or combining these production processes. The production processes are referred to, for example, US Patent Nos. 2989509, 3174948 and 3318848, Japanese Patent Application Laid-Open Nos. 227916/1984 (JP-59-227916A), 1216/1985 (JP-60-1216A), 60121/1985 (JP-60-60121A), 63216/1985 (JP-60-63216A), 101410/1988 (JP-63-101410A), 170610/1989 (JP-1-170610A), 29427/1990 (JP-2-29427A), 43212/1990 (JP-2-43212A), 65412/1992 (JP-4-65412A), 70267/1995 (JP-7-70267A), 90037/1995 (JP-7-90037A), 73549/1996 (JP-8-73549A), 59332/1997 (JP-9-59332A), 241342/1997 (JP-9-241342A), 101756/1998 (JP-10-101756A), 168144/1998 (JP-10-168144A), 60663/1999 (JP-11-60663A), 124422/1999 (JP-11-124422A), 26745/2003 (JP-2003-26745A) and 26746/2003 (JP-2003-26746A), WO95/25761 publication, WO95/27747 publication, and WO96/13534 publication.

Moreover, through this specification, the meaning of the term "polyacetal copolymer" includes "a polyacetal copolymer composition" which has contained various additives. That is, a stabilized polyacetal copolymer which has contained various additives mentioned below may be used as the polyacetal copolymer. The below-mentioned additives includes, for example, a formaldehyde emission inhibitor (in particular a basic nitrogen-containing compound), an antioxidant, a processing stabilizer, a heat stabilizer, a weather-resistant stabilizer, and a coloring agent. These additives may be contained in the polyacetal copolymer singly or in combination. Among these additives, the preferred additive includes the basic nitrogen-containing compound (in particular, e.g., a polyamide-series resin, and a crosslinked poly(meth)acrylic acid amide copolymer), the antioxidant (e.g., a hindered phenol-series compound, and a hindered amine-series compound), the processing stabilizer [in particular, a long-chain (or higher) fatty acid ester (a C₁₄₋₃₄long-chain fatty acid ester such as ethylene glycol distearate), a long-chain (or higher) fatty acid amide (a C₁₄₋₃₄long-chain fatty acid amide such as ethylene bis-stearyl amide), and a polyoxyalkylene glycol], the heat stabilizer [e.g., a salt of an organic carboxylic acid with an alkaline or alkaline earth metal]. In particular, the polyacetal copolymer is preferably a copolymer which has contained at least a hindered phenol-series compound and/or a hindered amine-series compound. Such a stabilized polyacetal copolymer is usually employed in the form of a particulate or particle (in particular a pellet) in many cases.

Incidentally, in the case where the polyacetal copolymer is a copolymer which has contained additive(s), the amount of each additive to be added may be, for example, about 0.0001 to 1 part by weight, preferably about 0.001 to 0.8 part by weight, and more preferably about 0.01 to 0.7 part by weight, relative to 100 parts by weight of the polyacetal copolymer.

### [Formaldehyde emission inhibitor]

Examples of the formaldehyde emission inhibitor include an active hydrogen-containing compound such as a basic nitrogen-containing compound, an active methylene group-containing compound, or a polyphenol-series compound. These formaldehyde emission inhibitors may be used singly or in combination.

### (Basic nitrogen-containing compound)

The basic nitrogen-containing compound includes, for example, an aminotriazine compound, a guanidine compound, a urea compound, a hydrazine compound, an amino acid compound, an amino alcohol compound, an imide compound, and an amide compound.

The aminotriazine compound includes, for example, melamine, a condensate of melamine (melam, melem, melon), a melamine resin (a melamine-formaldehyde resin), an N-hydroxyarylalkylmelamine-series compound [e.g., N,N',N"-mono to hexakis(o-, m- and/or p-hydroxyphenylmethyl)melamine], and a guanamine-series compound.

Examples of the guanamine-series compound include an aliphatic guanamine-series compound [for example, a monoguanamine (e.g., valeroguanamine, caproguanamine, heptanoguanamine, capryloguanamine, andstearoguanamine), an alkylenebisguanamine (succinoguanamine, glutaroguanamine, adipoguanamine, pimeloguanamine, suberoguanamine, azeloguanamine, and sebacoguanamine)], an alicyclic guanamine-series compound [for example, a monoguanamine compound (cyclohexanecarboguanamine, norbornenecarboguanamine, cyclohexenecarboguanamine, norbornanecarboguanamine, and a compound obtained by introducing a functional group thereto (e.g., a derivative whose cycloalkane residue has one to three functional group(s) as a substituent, such as an alkyl group, a hydroxy group, an amino group, an acetoamino group, a nitryl group, a carboxy group, an alkoxycarbonyl group, a carbamoyl group, an alkoxy group, a phenyl group, a cumyl group or a hydroxyphenyl group)], an aromatic guanamine-series compound [for example, a monoguanamine (benzoguanamine and a compound obtained by introducing a functional group thereto (e.g., a benzoguanamine derivative whose phenyl residue has one to five functional group(s) as a substituent, such as an alkyl group, a hydroxy group, an amino group, an acetoamino group, a nitryl group, a carboxy group, an alkoxycarbonyl group, a carbamoyl group, an alkoxy group, a phenyl group, a cumyl group or a hydroxyphenyl group: for example, o-, m- or p-toluguanamine, o-, m- or p-xyloguanamine, o-, m- or p-phenylbenzoguanamine, o-, m- or p-hydroxybenzoguanamine, 4-(4'-hydroxyphenyl)benzoguanamine, o-, m- or p-nitrylbenzoguanamine, 3,5-dimethyl-4-hydroxybenzoguanamine, and 3,5-di-t-butyl-4-hydroxybenzoguanamine), α- or β-naphthoguanamine and a derivative obtained by introducing a functional group thereto, a polyguanamine (e.g., phthaloguanamine, isophthaloguanamine, terephthaloguanamine, naphthalenediguanamine, and biphenylenediguanamine), and an aralkyl- or aralkyleneguanamine (e.g., phenylacetoguanamine, β-phenylpropioguanamine, and o-, m- or p-xylylenebisguanamine))], a hetero atom-containing guanamine-series compound [for example, an acetal group-containing guanamine (e.g., 2,4-diamino-6-(3,3-dimethoxypropyl-s-triazine), a dioxane ring-containing guanamine {e.g., [2-(4',6'-diamino-s-triazine-2'-yl)ethyl]-1,3-dioxane, [2-(4',6'-diamino-s-triazine-2'-yl)ethyl]-4-ethyl-4-hydroxymethyl-1,3-dioxane}, a tetraoxospiro ring-containing guanamine (e.g., CTU-guanamine, and CMTU-guanamine), an isocyanuric ring-containing guanamine (e.g., 1,3,5-tris[2-(4',6'-diamino-s-triazine-2'-yl)ethyl]isocyanurate, and 1,3,5-tris[3-(4',6'-diamino-s-triazine-2'-yl)propyl]isocyanurate), an imidazoyl ring-containing guanamine (e.g., guanamine compounds described in Japanese Patent Application Laid-Open Nos. 179671/1994 (JP-6-179671A), and 10871/1995 (JP-7-10871A)), an imidazole ring-containing guanamine (e.g., guanamine compounds described in Japanese Patent Application Laid-Open Nos. 41120/1972 (JP-47-41120A), 284675/1991 (JP-3-284675A), and 33766/1995 (JP-7-33766A)), and guanamine compounds described in Japanese Patent Application Laid-Open No. 154181/2000 (JP-2000-154181A)). Moreover, the guanamine-series compound also includes, for example, a compound (e.g., the melamine, melamine derivative and guanamine-series compound) having an amino group substituted by an alkoxymethyl group [e.g., a mono- to hexamethoxymethylmelamine, a mono- to tetramethoxymethylbenzoguanamine, and a mono to octamethoxymethyl-CTU-guanamine].

The guanidine compound includes cyanoguanidine, creatinine, and others.

Examples of the urea compound include a linear (or chain) urea compound [for example, biurea, biuret, a condensate of urea with formaldehyde (ureaform), a polyalkylene urea or aryleneurea (e.g., a polynonamethyleneurea)], a cyclic urea compound [for example, a hydantoin compound (hydantoin, 5-methylhydantoin, 5-ethylhydantoin, 5-isopropylhydantoin, 5-phenylhydantoin, 5-benzylhydantoin, 5,5-dimethylhydantoin, 5,5-pentamethylenehydantoin, 5-methyl-5-phenylhydantoin, 5,5-diphenylhydantoin, 5-(o-, m- or p-hydroxyphenyl)hydantoin, 5-(o-, m- or p-aminophenyl)hydantoin, allantoin, 5-methylallantoin, a metal salt of allantoin (e.g., an Al salt: allantoin dihydroxyalminum salt), crotylidene diurea, acetylene urea, a mono- to tetraalkoxy methylglycoluril (e.g., a mono- to tetramethoxy methylglycoluril), (iso)cyanuric acid, uric acid, and urazole].

Examples of the hydrazine compound include hydrazine and a hydrazine derivative (e.g., hydrazone, a carboxylic acid hydrazide), and preferably include a carboxylic acid hydrazide-series compound. For example, such a compound includes an aliphatic carboxylic acid hydrazide-series compound [for example, a monocarboxylic acid hydrazide (e.g., lauric hydrazide, stearic hydrazide, 12-hydroxystearic hydrazide, and 1,2,3,4-butanetetracarboxylic acid hydrazide), and a polycarboxylic acid hydrazide (e.g., succinic mono- or dihydrazide, glutaric mono- or dihydrazide, adipic mono- or dihydrazide, pimelic mono- or dihydrazide, suberic mono- or dihydrazide, azelaic mono- or dihydrazide, sebacic mono- or dihydrazide, mono- or dihydrazide of dodecanoic diacid, mono- or dihydrazide of hexadecanoic diacid, mono- or dihydrazide of eicosanoic diacid, and 7,11-octadecadiene-1,18-dicarbohydrazide)], an alicyclic carboxylic acid hydrazide-series compound [for example, a monocarboxylic acid hydrazide (e.g., a cyclohexanecarboxylic acid hydrazide), and a polycarboxylic acid hydrazide (e.g., dimeric mono- or dihydrazide, trimeric mono- to trihydrazide, a 1,2-, 1,3- or 1,4-cyclohexanedicarboxylic acid mono- or dihydrazide, and a cyclohexanetricarboxylic acid mono- to trihydrazide)], an aromatic carboxylic acid hydrazide-series compound [for example, a monocarboxylic acid hydrazide (e.g., benzoic hydrazide and a compound obtained by introducing a functional group thereto (e.g., a benzoguanamine derivative whose phenyl residue has one to five functional group(s) as a substituent, such as an alkyl group, a hydroxy group, an acetoxy group, an amino group, an acetoamino group, a nitryl group, a carboxy group, an alkoxycarbonyl group, a carbamoyl group, an alkoxy group, a phenyl group, a benzyl group, a cumyl group, or a hydroxyphenyl group: e.g., o-, m- or p-methylbenzoic hydrazide, 2,4-, 3,4-, 3,5- or 2,5-dimethylbenzoic hydrazide, o-, m- or p-hydroxybenzoic hydrazide, o-, m- or p-acetoxybenzoic hydrazide, 4-hydroxy-3-phenylbenzoic hydrazide, 4-acetoxy-3-phenylbenzoic hydrazide, 4-phenylbenzoic hydrazide, 4-(4'-phenyl) benzoic hydrazide, 4-hydroxy-3,5-dimethylbenzoic hydrazide, and 4-hydroxy-3,5-di-t-butylbenzoic hydrazide), α- or β-naphthoic hydrazide, and a compound obtained by introducing a functional group thereto (e.g., 3-hydroxy-2-naphthoic hydrazide, and 6-hydroxy-2-naphthoic hydrazide), and a polycarboxylic acid hydrazide (e.g., isophthalic mono- or dihydrazide, terephthalic mono- or dihydrazide, 1,4- or 2,6-naphthalenedicarboxylic acid mono- or dihydrazide, 3,3'-, 3,4'- or 4,4'-diphenyldicarboxylic acid mono- or dihydrazide, diphenyl ether dicarboxylic acid mono- or dihydrazide, diphenylmethanedicarboxylic acid mono- or dihydrazide, diphenylethanedicarboxylic acid mono- or dihydrazide, diphenoxyethanedicarboxylic acid mono- or dihydrazide, diphenyl sulfone dicarboxylic acid mono- or dihydrazide, diphenyl ketone dicarboxylic acid mono- or dihydrazide, 4,4''-terphenyldicarboxylic acid mono- or dihydrazide, 4,4'''-quarterphenyldicarboxylic acid mono- or dihydrazide, 1,2,4-benzenetricarboxylic acid mono- to trihydrazide, pyromellitic mono- to tetrahydrazide, and 1,4,5,8-naphthoic mono- to tetrahydrazide))], a hetero atom-containing carboxylic acid hydrazide-series compound [for example, a dioxane ring-containing carboxylic acid hydrazide (e.g., mono- or dihydrazide of 5-methylol-5-ethyl-2-(1,1-dimethyl-2-carboxyethyl)-1,3-dioxane), a tetraoxospiro ring-containing carboxylic acid hydrazide (e.g., mono- or dihydrazide of 3,9-bis(2-carboxyethyl)-2,4,8,10-tetraoxaspiro[5.5]undecane, mono- or dihydrazide of 3,9-bis(2-methoxycarbonylethyl)-2,4,8,10-tetraoxaspiro[5.5]undecane, mono- or dihydrazide of 3,9-bis(1,1-dimethyl-1-carboxymethyl)-2,4,8,10-tetraoxaspiro[5.5]undecane, and mono- or dihydrazide of 3,9-bis(1,1-dimethyl-1-methoxycarbonylmethyl)-2,4,8,10-tetraoxaspiro[5.5]undecane), an isocyanuric ring-containing carboxylic acid hydrazide (e.g., mono- to trihydrazide of 1,3,5-tris[2-carboxyethyl]isocyanurate, mono- to trihydrazide of 1,3,5-tris(3-carboxypropyl)isocyanurate), and a hydantoin ring-containing carboxylic acid hydrazide (e.g., 1,3-bis(2-hydrazinocarbonylethyl)-5-isopropylhydantoin)], a polymeric carboxylic acid hydrazide-series compound [for example, a homo- or copolymer of a poly(meth)acrylic hydrazide which may be crosslinked (e.g., an olefinic copolymer, a copolymer with a vinyl monomer, a copolymer with styrenic monomer, a crosslinked compound with divinylbenzene, and a crosslinked compound with bis(meth)acrylate): a polymer described in Japanese Patent Application Laid-Open Nos. 145529/1980 (JP-55-145529A) and 105905/1981 (JP-56-105905A), a commercial item "Aminopolyacrylamide APA" manufactured by Otsuka Chemical Co., Ltd., and copolymers described in US Patent No. 3574786].

In the amino acid compound, as the amino acid, there may be exemplified an α-amino acid, a β-amino acid, a γ-amino acid, a δ-amino acid, and the like. Examples of the α-amino acid include a monoaminomonocarboxylic acid (e.g., glycine, alanine, valine, norvaline, leucine, norleucine, isoleucine, phenylalanine, tyrosine, diiodotyrosine, surinamine, threonine, serine, proline, hydroxyproline, tryptophan, methionine, cystine, cysteine, citrulline, α-aminobutyric acid, hexahydropicolinic acid, teanine, o-tyrosine, m-tyrosine, and 3,4-dihydroxyphenylalanine), a monoaminodicarboxylic acid (e.g., aspartic acid, glutamic acid, asparagine, glutamine, hexahydrodipicolinic acid, and hexahydroquinolinic acid), a diaminomonocarboxylic acid (e.g., lysine, hydroxylysine, arginine, and histidine), and others. As the β-amino acid, γ-amino acid, and δ-amino acid, there may be exemplified β-alanine, β-aminobutyric acid, hexahydroxycinchomeronic acid, γ-aminobutyric acid, δ-amino-n-valeric acid, and others. These amino acids may be a D-, L-, or DL-form. The amino acid also includes an amino acid derivative of which a carboxyl group is subjected to metal salination (e.g., an alkali metal salt, an alkaline earth metal salt), amidation, hydrazidation, or esterification (e.g., methyl esterification, ethyl esterification).

The amino alcohol compound includes, for example, monoethanolamine, diethanolamine, 2-amino-1-butanol, 2-amino-2-methyl-1-propanol, 2-amino-2-methyl-1,3-propanediol, 2-amino-2-ethyl-1,3-propanediol, tris(hydroxymethyl)aminomethane, and others.

Examples of the imide compound include phthalic acid imide, trimellitic acid imide, and pyromellitic acid imide.

The amide compound includes, for example, an aliphatic carboxylic acid amide (e.g., malonamide, adipic acid amide, sebacic acid amide, and dodecanoic diacid amide), a cyclic carboxylic acid amide (e.g., ε-caprolactam), an aromatic carboxylic acid amide (e.g., benzoic acid amide, o-, m- or p-aminobenzamide, isophthalic acid diamide, and terephthalic acid amide), a polyamide-series resin [for example, a nylon 3 (a poly-β-alanine), a nylon 46, a nylon 6, a nylon 66, a nylon 11, a nylon 12, a nylon MXD6, a nylon 6-10, a nylon 6-11, a nylon 6-12, a nylon 6-66-610, and a nylon 9T], a polyester amide, a polyamide imide, a polyurethane, a poly(meth)acrylic acid amide-series resin [e.g., a homo- or copolymer of a poly(meth)acrylic amide which may be crosslinked, such as polymers described in US Patent No. 5011890], a homo- or copolymer of a poly(vinyllactam) [for example, a homo- or copolymer of a poly(N-vinylpyrrolidone) (e.g., homo- or copolymers described in Japanese Patent Application Laid-Open No. 52338/1980 (JP-55-52338A), and US Patent No. 3204014)], a poly(N-vinylcarboxylic acid amide), a copolymer of N-vinylcarboxylic acid amide and another vinyl monomer (e.g., homo- or copolymers described in Japanese Patent Application Laid-Open Nos. 247745/2001 (JP-2001-247745A), 131386/2001 (JP-2001-131386A), 311302/1996 (JP-8-311302A) and 86614/1984 (JP-59-86614A), US Patent Nos. 5455042, 5407996 and 5338815), and others.

### (Active methylene group-containing compound)

Examples of the active methylene group-containing compound include a β-diketone compound [for example, a β-keto acid [an ester derivative or metal salt of a (cyclo)alkylcarbonylacetic acid, an arylcarbonylacetic acid and an aralkylcarbonylacetic acid (e.g., an ester derivative of a polyhydric alcohol: e.g., an acetoacetic acid ester derivative or benzoylacetic acid ester derivative of a polyvinyl alcohol homo- or copolymer, and an acetoacetic acid group-containing saturated polyester-series resin described in Japanese Patent Application Laid-Open No. 114041/1999 (JP-11-114041A))], an acetylacetone compound (acetylacetone, dimethyl 1,3-acetonedicarboxylate, 1,3-acetonedicarboxylic acid diamide, a poly(1,3-acetonedicarboxylate), cyclohexane-1,3-dione, and dimedone], and others.

The polyphenol compound includes, for example, a novolak phenol resin, a phenol-aralkyl resin, a modified phenol resin (e.g., a phenol-melamine resin, and a phenol-aralkyl-melamine resin), a polyvinylphenol homopolymer or copolymer, a tannin, a catechin, and a lignin.

Incidentally, the formaldehyde emission inhibitor (e.g., a hydrazine compound, and an amino acid compound) may be carried on (or supported with) a layered material, a porous material (e.g., a hydrotalcite, a montmorillonite, a silica gel, an alumina, a titania, a zirconia, a sepiolite, a smectite, a palygorskite, an imogolite, a zeolite, and an activated carbon), or may form a inclusion or clathrate compound with a host (e.g., α-, β- , γ- , or δ-cyclodextrin).

The formaldehyde emission inhibitors may be used singly or in combination.

Among these formaldehyde emission inhibitors, the basic nitrogen-containing compound is preferred. In particular, the aminotriazine compound (particularly, the guanamine-series compound such as the aromatic guanamine-series compound or the hetero atom-containing guanamine-series compound), the urea compound (particularly the linear (or chain) urea compound, and the cyclic urea compound), the hydrazine compound (particularly, the carboxylic acid hydrazide-series compound such as the aliphatic carboxylic acid hydrazide-series compound, the alicyclic carboxylic acid hydrazide-series compound, the aromatic carboxylic acid hydrazide-series compound, the hetero atom-containing carboxylic acid hydrazide-series compound or the polymeric carboxylic acid hydrazide-series compound), the amino acid compound (e.g., the α-, β- , γ- or δ-amino acid), the amide compound (particularly the amide-series resin such as the polyamide-series resin or the poly(meth)acrylic acid amide-series resin) is preferably used.

Incidentally, these formaldehyde emission inhibitors have individually characteristic formaldehyde-inhibiting effects in some cases. For example, the addition of a small amount of any one of the guanamine-series compound, the linear (or chain) urea compound, the cyclic urea compound and the carboxylic acid hydrazide-series compound alone effectively reduces the amount of formaldehyde emitted from a shaped article both under a dry environment (or dry atmosphere) and under a humid or wet environment containing water (or wet atmosphere). On the other hand, in the case of adding a small amount of the polyamide-series resin alone, the amount of formaldehyde emitted from a shaped article is effectively reduced under a humid or wet environment containing water, but less reduced under a dry environment.

In the present invention, therefore, it is preferred to utilize a combination of a non-amide-series basic nitrogen-containing compound (e.g., at least one member selected from the group consisting of the guanamine-series compound, the linear (or chain) urea compound, the cyclic urea compound, and the carboxylic acid hydrazide-series compound) with the amide compound (e.g., at least one member selected from the group consisting of the polyamide-series resin and the poly(meth)acrylic acid amide-series resin). In the case where the inhibitor is composed of such a combination, further reduction of formaldehyde emission occurs due to the concomitant use of the amide compound (e.g., the amide-series resin such as the polyamide-series resin or the poly(meth)acrylic acid amide-series resin), and the formaldehyde emission inhibitor shows the multiplier effect.

The proportion of the formaldehyde emission inhibitor is about 0.001 to 20 parts by weight, preferably about 0.01 to 10 parts by weight, more preferably about 0.01 to 5 parts by weight (e.g., about 0.01 to 2 parts by weight), and particularly about 0.02 to 5 parts by weight (e.g., about 0.02 to 2 parts by weight), relative to 100 parts by weight of the polyacetal copolymer.

Incidentally, in the case of using the non-amide-series basic nitrogen-containing compound and the amide compound in combination, the proportion between the compounds [the former/the latter (weight ratio)] may be about 99/1 to 10/90, preferably about 95/5 to 30/70, and more preferably about 90/10 to 40/60.

The polyacetal resin composition may further comprise a stabilizer such as an antioxidant, a processing stabilizer, a heat stabilizer or a weather-resistant stabilizer.

### (Antioxidant)

The antioxidant includes, for example, a hindered phenol-series compound, a hindered amine-series compound, an amine-series antioxidant [e.g., phenylnaphthylamine, N,N'-diphenyl-1,4-phenylenediamine, and 4,4'-di(α,α-dimethylbenzyl)diphenylamine], a phosphorus-containing antioxidant [e.g., a phosphite-series compound such as triphenyl phosphite, a triphenyl phosphate-series compound such as tris(2,4-di-t-butylphenyl) phosphate, a diphosphonite-series compound, and a metal salt of hypophosphorous acid], a sulfur-containing antioxidant (e.g., dilaurylthiodipropionate), a hydroquinone-series antioxidant (e.g., 2,5-di-t-butylhydroquinone), a quinoline-series antioxidant (e.g., 6-ethoxy-2,2,4-trimethyl-1,2-dihydroquinoline), and others. Incidentally, the hindered amine-series compound also has a function as a weather-resistant stabilizer depending on the kind or species, as mentioned below. Among these antioxidants, the hindered phenol-series compound, and the hindered amine-series compound are preferred. The antioxidant usually comprises the hindered phenol-series compound in many cases.

### (Hindered phenol-series compound)

The hindered phenol-series compound may include a conventional phenol-series antioxidant, for example, a monocyclic hindered phenolic compound (e.g., 2,6-di-t-butyl-p-cresol), a polycyclic hindered phenolic compound in which rings are connected or bonded to each other through a hydrocarbon group or a group containing a sulfur atom [e.g., a C₁₋₁₀alkylene-bis to tetrakis(t-butylphenol) such as 2,2'-methylene bis(4-methyl-6-t-butylphenol), 4,4'-methylene bis(2,6-di-t-butylphenol) or 1,1,3-tris(2-methyl-4-hydroxy-5-t-butylphenyl)butane; a C₂₋₁₀ alkenylene or dienylene-bis to tetrakis(t-butylphenol) such as 4,4'-butylidene bis(3-methyl-6-t-butylphenol); a C₆₋₂₀arylene or aralkylene-bis to tetrakis(t-butylphenol) such as 1,3,5-trimethyl-2,4,6-tris(3,5-di-t-butyl-4-hydroxybenzyl)benzene; and a bis(t-butylphenol) compound in which t-butylphenol groups are connected or bonded to each other through a group having a sulfur atom, for example, 4,4'-thio bis(3-methyl-6-t-butylphenol)], a hindered phenolic compound having an ester group or an amide group [e.g., a t-butylphenol compound (or derivative) having a C₂₋₁₀alkylenecarbonyloxy group, exemplified by n-octadecyl-3-(4'-hydroxy-3',5'-di-t-butylphenyl)propionate and n-octadecyl-2-(4'-hydroxy-3',5'-di-t-butylphenyl)propionate; a bis to tetrakis(t-butylphenol) compound in which t-butylphenol groups are connected or bonded to each other through a polyol ester of a fatty acid, exemplified by 1,6-hexanediol-bis[3-(3,5-di-t-butyl-4-hydroxyphenyl)propionate], triethylene glycol-bis[3-(3-t-butyl-5-methyl-4-hydroxyphenyl)propionate] and pentaerythritol tetrakis[3-(3,5-di-t-butyl-4-hydroxyphenyl)propionate]; a bis to tetrakis(t-butylphenol) having a heterocyclic group and a C₂₋₁₀ alkylenecarbonyloxy group, exemplified by 3,9-bis[2-{3-(3-t-butyl-4-hydroxy-5-methylphenyl)propionyloxy}-1,1-dimethylethyl]-2,4,8,10-tetraoxaspiro[5.5]undecane; a t-alkylphenol (e.g., t-butylphenol, and t-pentylphenol) compound (or derivative) having a C₃₋₁₀alkenylcarbonyloxy group, exemplified by 2-t-butyl-6-(3'-t-butyl-5'-methyl-2'-hydroxybenzyl)-4-methylphenylacrylate and 2-[1-(2-hydroxy-3,5-di-t-pentylphenyl)ethyl]-4,6-di-t-pentylphenylacrylate; a hindered phenolic compound having a phosphonic ester group, exemplified by di-n-octadecyl-3,5-di-t-butyl-4-hydroxybenzylphosphonate; a hindered phenolic compound having an amide unit, exemplified by N,N'-hexamethylene bis(3,5-di-t-butyl-4-hydroxy-dihydrocinnamamide), N,N'-ethylene bis[3-(3,5-di-t-butyl-4-hydroxyphenyl)propionamide], N,N'-tetramethylene bis[3-(3,5-di-t-butyl-4-hydroxyphenyl)propionamide], N,N'-hexamethylene bis[3-(3,5-di-t-butyl-4-hydroxyphenyl)propionamide], N,N'-ethylene bis[3-(3-t-butyl-5-methyl-4-hydroxyphenyl)propionamide], N,N'-hexamethylene bis[3-(3-t-butyl-5-methyl-4-hydroxyphenyl)propionamide], N,N'-bis[3-(3,5-di-t-butyl-4-hydroxyphenyl)propionyl]hydrazine, N,N'-bis[3-(3-t-butyl-5-methyl-4-hydroxyphenyl)propionyl]hydrazine, 1,3,5-tris(3,5-dit-butyl-4-hydroxybenzyl)isocyanurate, and 1,3,5-tris(4-t-butyl-3-hydroxy-2,6-dimethylbenzyl)isocyanurate]; and others. Among these compounds, a phenolic compound having a t-butyl group (particularly, a plurality of t-butyl groups), in particular, a compound having a plurality of t-butylphenol sites, is preferred. The hindered phenol-series compounds may be used singly or in combination.

### (Hindered amine-series compound)

The hindered amine-series compound may include a piperidine derivative having a steric hindrance group, for example, an ester group-containing piperidine derivative [for example, an aliphatic acyloxypiperidine (e.g., a C₂₋₂₀aliphatic acyloxy-tetramethylpiperidine) such as 4-acetoxy-2,2,6,6-tetramethylpiperidine, 4-stearoyloxy-2,2,6,6-tetramethylpiperidine or 4-acryloyloxy-2,2,6,6-tetramethylpiperidine; an aromatic acyloxypiperidine (e.g., a C₇₋₁₁aromatic acyloxytetramethylpiperidine) such as 4-benzoyloxy-2,2,6,6-tetramethylpiperidine; an aliphatic di- or tricarboxylic acid-bis- or trispiperidyl ester (e.g., a C₂₋₂₀aliphatic dicarboxylic acid-bispiperidyl ester) such as bis(2,2,6,6-tetramethyl-4-piperidyl)oxalate, bis(2,2,6,6,-tetramethyl-4-piperidyl)malonate, bis(2,2,6,6-tetramethyl-4-piperidyl)adipate, bis(1,2,2,6,6-pentamethyl-4-piperidyl)adipate, bis(2,2,6,6-tetramethyl-4-piperidyl)sebacate or bis(1,2,2,6,6-pentamethyl-4-piperidyl)sebacate; an aromatic di- to tetracarboxylic acid-bis- to tetrakispiperidyl ester (e.g., an aromatic di- or tricarboxylic acid-bis- or trispiperidyl ester) such as bis(2,2,6,6-tetramethyl-4-piperidyl)terephthalate or tris(2,2,6,6-tetramethyl-4-piperidyl)benzene-1,3,5-tricarboxylate], an ether group-containing piperidine derivative [for example, a C₁₋₁₀alkoxypiperidine (e.g., a C₁₋₆alkoxy-tetramethylpiperidine) such as 4-methoxy-2,2,6,6-tetramethylpiperidine; a C₅₋₈cycloalkyloxypiperidine such as 4-cyclohexyloxy-2,2,6,6-tetramethylpiperidine; a C₆₋₁₀aryloxypiperidine such as 4-phenoxy-2,2,6,6-tetramethylpiperidine; a C₆₋₁₀aryl-C₁₋₄alkyloxy-piperidine such as 4-benzyloxy-2,2,6,6-tetramethylpiperidine; or an alkylenedioxybispiperidine (e.g., a C₁₋₁₀alkylenedioxy-bispiperidine) such as 1,2-bis(2,2,6,6-tetramethyl-4-piperidyloxy)ethane], an amide group-containing piperidine derivative [for example, a carbamoyloxypiperidine such as 4-(phenylcarbamoyloxy)-2,2,6,6-tetramethylpiperidine; an alkylenedioxy-bis piperidine substituted with a carbamoyloxy group, e.g., bis(2,2,6,6-tetramethyl-4-piperidyl)hexamethylene-1,6-dicarbamate]. Moreover, the hindered amine-series compound also includes, for example, a polycondensate of piperidine derivatives having high molecular weight [e.g., a polycondensate of dimethyl succinate and 1-(2-hydroxyethyl)-4-hydroxy-2,2,6,6-tetramethylpiperidine, and a poly{6-[(1,1,3,3-tetramethylbutyl)imino-1,3,5-triazin-2,4-diyl][2-(2,2,6,6-tetramethylpiperidyl)amino]hexamethylene[4-(2,2,6,6-tetramethylpiperidyl)imino]}]. These hindered amine-series compounds may be used singly or in combination.

### (Processing stabilizer)

Examples of the processing stabilizer include a long-chain or higher fatty acid or a derivative thereof, a polyoxyalkylene glycol, a silicone compound, a fluorine-containing compound (e. g. , a fluorine-containing oligomer or a fluorine-containing resin, such as a polytetrafluoroethylene, a polychlorotrifluoroethylene, a polyvinylidene fluoride, a tetrafluoroethylene-hexafluoropropylene copolymer, or a tetrafluoroethylene-perfluoroalkyl vinyl ether copolymer), a wax [e.g., a polyolefinic wax (such as a polyethylene wax), an olefin copolymer wax (such as an ethylene copolymer wax), and a partially oxidized substance or mixture of such a wax).

The preferred processing stabilizer includes (a) the long-chain or higher fatty acid or a derivative thereof, (b) the polyoxyalkylene glycol, and (c) the silicone-series compound. The processing stabilizer usually comprises at least one member selected from these compounds in many cases.

### (a) Long-chain or higher fatty acid or derivative thereof

The long-chain or higher fatty acid may be a saturated fatty acid or an unsaturated fatty acid. Moreover, a part of hydrogen atoms in the higher fatty acid may be substituted with a substituent(s) such as hydroxyl group. Such a higher fatty acid is exemplified by a mono- or di-carboxylic fatty acid having not less than 10 carbon atoms, for example, a saturated mono-carboxylic fatty acid having not less than 10 carbon atoms [e.g., a saturated C₁₀₋₃₄ fatty acid (preferably a saturated C₁₀₋₃₀ fatty acid) such as capric acid, lauric acid, myristic acid, pentadecylic acid, palmitic acid, stearic acid, arachic acid, behenic acid or montanic acid], an unsaturated mono-carboxylic fatty acid having not less than 10 carbon atoms [e.g., an unsaturated C₁₀₋₃₄ fatty acid (preferably an unsaturated C₁₀₋₃₀ fatty acid) such as oleic acid, linoleic acid, linolenic acid, arachidonic acid or erucic acid], a di-carboxylic fatty acid having not less than 10 carbon atoms (a dibasic fatty acid) [e.g., a saturated di-carboxylic C₁₀₋₃₀ fatty acid (preferably a saturated di-carboxylic C₁₀₋₂₀ fatty acid) such as sebacic acid, dodecanoic acid, tetradecanoic acid or thapsiaic acid (or thapsic acid), and an unsaturated di-carboxylic C₁₀₋₃₀ fatty acid (preferably an unsaturated di-carboxylic C₁₀₋₂₀ fatty acid) such as decenoic diacid or dodecenoic diacid], and others. These fatty acids may be used singly or in combination. The fatty acid also includes one which has one or a plurality of hydroxyl group(s) in the molecular (e.g., a hydroxy-saturated C₁₀₋₂₆ fatty acid such as 12-hydroxy stearic acid).

The derivative of the higher fatty acid includes, for example, a fatty acid ester, a fatty acid amide, and others. As to the higher fatty acid ester, there is no particular limitation on its structure, and an ester of either a straight or branched chain fatty acid can be used. As the higher fatty acid ester, there may be mentioned, for example, an ester of the above-mentioned higher fatty acid with an alcohol (e.g., an ester having one or a plurality of ester bond(s), such as a monoester, a diester, a triester, or tetraester). There is no particular limitation on a species of the alcohol constituting the higher fatty acid ester. The polyhydric alcohol may include a polyhydric alcohol having about 2 to 8 carbon atoms (preferably, about 2 to 6 carbon atoms) or a polymer thereof, for example, a diol exemplified by an alkylene glycol [e.g., a C₂₋₈alkylene glycol (preferably a C₂₋₆ alkylene glycol) such as ethylene glycol, diethylene glycol or propylene glycol]; a triol exemplified by glycerin, trimethylolpropane, or a derivative thereof; a tetraol exemplified by pentaerythritol, sorbitan, or a derivative thereof; as well as a homo- or copolymer of the polyhydric alcohol(s) [e.g., a homo- or copolymer of an alkylene glycol such as a polyethylene glycol or a polypropylene glycol, a polyglycerin, and dipentaerythritol, a polypentaerythritol]. The average of polymerization degree of the polyalkylene glycol is not less than 2 (e.g., about 2 to 500), preferably about 2 to 400 (e.g., about 2 to 300), and the preferred average of polymerization degree is not less than 16 (e.g., about 20 to 200). Such a polyalkylene glycol is preferably used on esterification with a fatty acid having not less than 12 carbon atoms. The preferred polyhydric alcohol is a polyalkylene glycol having the average of polymerization degree of not less than 2. These polyhydric alcohols may be used singly or in combination.

Examples of such an ester of a long-chain or higher fatty acid include a C₁₄₋₃₄long- chain fatty acid ester, e.g., ethylene glycol mono- or dipalmitate, ethylene glycol mono- or distearate, ethylene glycol mono- or dibehenate, ethylene glycol mono- or dimontanate, glycerin mono- to tripalmitate, glycerin mono- to tristearate, glycerin mono- to tribehenate, glycerin mono- to trimontanate, pentaerythritol mono- to tetrapalmitate, pentaerythritol mono- to tetrastearate, pentaerythritol mono- to tetrabehenate, pentaerythritol mono- to tetramontanate, a polyglycerin tristearate, trimethylolpropane monopalmitate, pentaerythritol monoundecylate, sorbitan monostearate, a monolaurate of a polyalkylene glycol (such as a polyethylene glycol or a polypropylene glycol), a monopalmitate of the polyalkylene glycol, a monostearate of the polyalkylene glycol, a monobehenate of the polyalkylene glycol, a monomontanate of the polyalkylene glycol, a dilaurate of the polyalkylene glycol, a dipalmitate of the polyalkylene glycol, a distearate of the polyalkylene glycol, a dibehenate of the polyalkylene glycol, a dimontanate of the polyalkylene glycol, a dioleate of the polyalkylene glycol, and a dilinolate of the polyalkylene glycol.

The fatty acid amide includes, for example, an acid amide (e.g., monoamide and bisamide) of the higher fatty acid (a mono- or di-carboxylic higher fatty acid) with an amine (such as a monoamine, a diamine or a polyamine). As the monoamide, there may be mentioned, for example, a primary acid amide of a saturated fatty acid (such as capric acid amide, lauric acid amide, myristic acid amide, palmitic acid amide, stearic acid amide, arachic acid amide, behenic acid amide or montanic acid amide); a primary acid amide of an unsaturated fatty acid (such as oleic acid amide); and a secondary acid amide of a saturated and/or an unsaturated fatty acid with a monoamine (such as stearyl stearic acid amide or stearyl oleic acid amide). The preferred fatty acid amide is a bisamide. The bisamide includes, for example, a bisamide of the fatty acid with a C₁₋₆alkylenediamine (particularly, C₁₋₂alkylenediamine). The concrete examples of the bisamide include a C₁₄₋₃₄higher fatty acid amide, e.g., ethylenediamine-dipalmitic acid amide, ethylenediamine-distearic acid amide (ethylene bis-stearyl amide), hexamethylenediamine-distearic acid amide, ethylenediamine-dibehenic acid, ethylenediamine-dimontanic acid, ethylenediamine-dioleic acid amide, and ethylenediamine-dierucic acid amide. Furthermore, a bisamide in which different species of acyl groups are independently bonded to amine sites of an alkylenediamine, such as ethylenediamine-(stearic acid amide) oleic acid amide, may also be used. In the acid amide, it is preferred that the fatty acid constituting the acid amide is a saturated fatty acid.

These long-chain (or higher) fatty acid amides or derivatives thereof may be used singly or in combination.

### (b) Polyoxyalkylene glycol

Exemplified as the polyoxyalkylene glycol is a homopolymer of an alkylene glycol [e.g., a C₂₋₆alkylene glycol (preferably a C₂₋₄alkylene glycol) such as ethylene glycol, propylene glycol or tetramethylene glycol], a copolymer thereof, and a derivative of the homopolymer or the copolymer. Specifically, the polyoxyalkylene glycol includes a copolymer, e.g., a polyC₂₋₆oxyalkylene glycol (preferably a polyC₂₋₄oxyalkylene glycol) such as a polyethylene glycol, a polypropylene glycol or a polytetramethylene glycol, a polyoxyethylene-polyoxypropylene copolymer (e.g., a random or block copolymer), a polyoxyethylenepolyoxypropylene glyceryl ether and a polyoxyethylenepolyoxypropylene monobutyl ether. The preferred polyoxyalkylene glycol includes a polymer having an oxyethylene unit (e.g., a polyethylene glycol, a polyoxyethylene-polyoxypropylene copolymer, and a derivative thereof), and the like. Moreover, the number average molecular weight of the polyoxyalkylene glycol is about 3 x 10² to 1 x 10⁶ (e.g., about 5 x 10² to 5 x 10⁵), and preferably about 1 x 10³ to 1 x 10⁵ (e.g., about 1 x 10³ to 5 x 10⁴).

These polyoxyalkylene glycols may be used singly or in combination.

### (c) Silicone-series compound

Exemplified as the silicone-series compound is a polyorganosiloxane. Examples of the polyorganosiloxane include a homopolymer of a dialkylsiloxane (e.g., dimethylsiloxane), an alkylarylsiloxane (e.g., methylphenylsiloxane) and a diarylsiloxane (e.g., diphenylsiloxane) (for example, a polydimethylsiloxane, and a polymethylphenylsiloxane), or a copolymer thereof. The polyorganosiloxane may be an oligomer. Moreover, as the polyorganosiloxane, there may be also mentioned a modified polyorganosiloxane having a substituent(s) [such as an epoxy group, a hydroxyl group, an alkoxy group, a carboxyl group, an amino group or a substituted amino group (e.g., a dialkylamino group), an ether group, a vinyl group or a (meth)acryloyl group] at an end or in the main chain of the molecule (e.g., a modified silicone). These silicone-series compounds may be used singly or in combination.

### (Heat stabilizer)

The heat stabilizer includes, for example, (a) a phosphine-series compound, (b) an organic carboxylic acid or a metal salt thereof, (c) an alkaline or alkaline earth metal compound, (d) a hydrotalcite, and (e) a zeolite.

### (a) Phosphine-series compound

As the phosphine-series compound, there may be mentioned an alkylphosphine (e.g., a triC₁₋₁₀alkylphosphine such as triethylphosphine, tripropylphosphine or tributylphosphine), a cycloalkylphosphine (e.g., a triC₅₋₁₂cycloalkylphosphine such as tricyclohexylphosphine), an arylphosphine (e.g., a triC₆₋₁₂arylphosphine such as triphenylphosphine, p-tolyldiphenylphosphine, di-p-tolylphenylphosphine, tri-m-aminophenylphosphine, tri-2,4-dimethylphenylphosphine, tri-2,4,6-trimethylphenylphosphine, tri-o-tolylphosphine, tri-m-tolylphosphine or tri-p-tolylphosphine), an aralkylphosphine (e.g., a triC₆₋₁₂arylC₁₋₄alkylphosphine such as tri-o-anisylphosphine or tri-p-anisylphosphine), an arylalkenylphosphine (e.g., a diC₆₋₁₂arylC₂₋₁₀ alkenylphosphine such as diphenylvinylphosphine or allyldiphenylphosphine), an arylaralkylphosphine compound (e.g., a di-C₆₋₁₂aryl(C₆₋₁₂arylC₁₋₄alkyl)phosphine such as p-anisyldiphenylphosphine, and a C₆₋₁₂aryldi (C₆₋₁₂arylC₁₋₄alkyl)phosphine such as di-p-anisylphenylphosphine), an alkylarylaralkylphosphine (e.g., a C₁₋₁₀alkylC₆₋₁₂aryl (C₆₋₁₂arylC₁₋₄alkyl) phosphine such as methylphenyl-p-anisylphosphine), and a bisphosphine [for example, a bis(diC₆₋₁₂ arylphosphino)C₁₋₁₀alkane such as 1,4-bis(diphenylphosphino)butane]. These phosphine compounds may be used singly or in combination.

### (b) Organic carboxylic acid or metal salt of organic carboxylic acid

The organic carboxylic acid includes, for example, a carboxyl group-containing compound having a pKa of not less than 3.6. Such a compound includes an organic carboxylic acid described in Japanese Patent Application Laid-Open No. 239484/2000 (JP-2000-239484A), and others.

The metal salt of the organic carboxylic acid includes, for example, a salt of an organic carboxylic acid with a metal (e.g., an alkali metal such as Li, Na or K; an alkaline earth metal such as Mg or Ca; and a transition metal such as Zn).

The organic carboxylic acid constituting the metal salt of the organic carboxylic acid may be a compound of low molecular weight or a compound of high molecular weight. As the organic carboxylic acid, there may be used a saturated or unsaturated lower aliphatic carboxylic acid having less than 10 carbon atoms, and a polymer of an unsaturated aliphatic carboxylic acid, in addition to a saturated or unsaturated higher aliphatic carboxylic acid exemplified in item of the higher fatty acid. Moreover, these aliphatic carboxylic acids may have a hydroxyl group. The saturated lower aliphatic carboxylic acid includes, for example, a saturated C₁₋₉monocarboxylic acid (e.g., acetic acid, propionic acid, butyric acid, isobutyric acid, valeric acid, isovaleric acid, pivalic acid, caproic acid, and caprylic acid), a saturated C₂₋₉dicarboxylic acid (e.g., oxalic acid, malonic acid, succinic acid, glutaric acid, adipic acid, pimelic acid, cork acid, and azelaic acid), and a hydroxy acid thereof (e.g., glycolic acid, lactic acid, glyceric acid, hydroxybutyric acid, and citric acid).

The unsaturated lower aliphatic carboxylic acid includes, for example, an unsaturated C₃₋₉monocarboxylic acid [e.g., (meth)acrylic acid, crotonic acid, and isocrotonic acid], an unsaturated C₄₋₉dicarboxylic acid (e.g., maleic acid, and fumaric acid), and a hydroxy acid thereof (e.g., propiolic acid).

Moreover, exemplified as the polymer of the unsaturated aliphatic carboxylic acid is a copolymer of a polymerizable unsaturated carboxylic acid [an α,β-ethylene-type (ethylenic) unsaturated carboxylic acid, for example, a polymerizable unsaturated monocarboxylic acid (such as (meth)acrylic acid), a polymerizable unsaturated polycarboxylic acid (such as itaconic acid, maleic acid, or fumaric acid), an anhydride of the polycarboxylic acid, a monoester of the polycarboxylic acid (e.g., a monoC₁₋₁₀alkylester of the polycarboxylic acid such as monoethyl maleate), and others] with an olefin (e.g., an α-C₂₋₁₀olefin such as ethylene or propylene).

These organic carboxylic acids or these metal salts of the organic carboxylic acids may be used singly or in combination.

The preferred organic carboxylic acid includes a copolymer of an olefin and (meth)acrylic acid, a hydroxy acid (e.g., glycolic acid, lactic acid, and 12-hydroxystearic acid), and others.

The preferred metal salt of the organic carboxylic acid includes a salt of an organic carboxylic acid with an alkaline or alkaline earth metal (e.g., magnesium acetate, calcium acetate, lithium citrate, sodium citrate, potassium citrate, calcium citrate, lithium stearate, magnesium stearate, calcium stearate, lithium 12-hydroxystearate, magnesium 12-hydroxystearate, and calcium 12-hydroxystearate), an ionomer resin (a resin in which at least a part of carboxyl groups contained in the copolymer of the polymerizable unsaturated polycarboxylic acid with the olefin is neutralized with an ion of a metal such as an alkaline or alkaline earth metal or zinc), and others. The ionomer resin is, for example, commercially available as ACLYN (manufactured by Allied Signal Inc.), Himilan (manufactured by Du Pont-Mitsui Polychemicals Co., Ltd.), Surlyn (manufactured by Du Pont), and others.

### (c) Alkaline or alkaline earth metal compound

The alkaline or alkaline earth metal compound includes an inorganic compound exemplified by a metal oxide (such as CaO, or MgO), a metal hydroxide (such as LiOH, Ca(OH)₂, or Mg(OH)₂), and a salt of an inorganic acid with a metal [e.g., a salt of an inorganic acid (such as a salt of carbonic acid with a metal (such as Li₂CO₃, Na₂CO₃, K₂CO₃, CaCO₃ or MgCO₃), a borate, and a phosphate)]. In particular, the metal oxide and the metal hydroxide are preferred. Among the compounds, the alkaline earth metal compound is preferred.

These alkaline or alkaline earth metal compounds may be used singly or in combination.

### (d) Hydrotalcite

As the hydrotalcite, hydrotalcites recited in Japanese Patent Application Laid-Open No. 1241/1985 (JP-60-1241A) and Japanese Patent Application Laid-Open No. 59475/1997 (JP-9-59475A), such as hydrotalcite compounds represented by the following formula are usable.

[M²⁺ ₁₋ₓM³⁺ ₓ(OH)₂]^{x+}[Aⁿ⁻ _{x/n} · mH₂O]^{x-}

In the formula, M²⁺ represents Mg²⁺, Mn²⁺, Fe²⁺, Co²⁺, or any of other divalent metal ions; M³⁺ represents Al³⁺, Fe³⁺, Cr³⁺, or any of other trivalent metal ions; Aⁿ⁻ represents CO₃²⁻, OH⁻, HPO₄²⁻, SO₄²⁻, or any of other n-valent anions (particularly, monovalent or divalent anion); x is 0< x <0.5; and m is 0≤ m <1.

These hydrotalcites may be used singly or in combination.

Incidentally, the hydrotalcite is available from Kyowa Chemical Industry Co., Ltd. under the trade name "DHT-4A", "DHT-4A-2", or "Alcamizer".

### (e) Zeolite

The zeolite is not particularly limited to a specific one, and for example, a zeolite recited in Japanese Patent Application Laid-Open No. 62142/1995 (JP-7-62142A) [zeolites the smallest unit cell of which is a crystalline aluminosilicate with an alkaline and/or alkaline earth metal (A-, X-, Y-, L-, and ZSM-type zeolites, mordenite-type zeolite; chabazite, mordenite, faujasite, and other natural zeolites)] can be employed.

These zeolites may be used singly or in combination.

The heat stabilizer may be used singly or in combination. In particular, a combination use of the basic nitrogen-containing compound as a formaldehyde stabilizer, and at least one member selected from the group consisting of the phosphine compound, the metal salt of the organic carboxylic acid, the alkaline or alkaline earth metal compound, the hydrotalcite and the zeolite imparts a high thermal stability to a resin composition even if the amount of the heat stabilizer to be added is extremely small.

### (Weather (light)-resistant stabilizer)

Moreover, the polyacetal resin composition of the present invention may further comprise a weather (light)-resistant stabilizer. The weather (light)-resistant stabilizer includes (a) a benzotriazole-series compound, (b) a benzophenone-series compound, (c) an aromatic benzoate-series compound, (d) a cyanoacrylate-series compound, (e) an oxalic anilide-series compound, (f) a hydroxyphenyl-1,3,5-triazine-series compound, (g) a hindered amine-series compound, and others.

Examples of the benzotriazole-series compound (a) include a benzotriazole compound having an aryl group substituted with a hydroxyl group and an alkyl (C₁₋₆alkyl) group, such as 2-(2'-hydroxy-5'-methylphenyl)benzotriazole, 2-(2'-hydroxy-3',5'-di-t-butylphenyl)benzotriazole, 2-(2'-hydroxy-3',5'-di-t-amylphenyl)benzotriazole or 2-(2'-hydroxy-3',5'-diisoamylphenyl)benzotriazole; a benzotriazole compound having an aryl group substituted with a hydroxyl group and an aralkyl (or aryl) group, such as 2-[2'-hydroxy-3',5'-bis(α,α-dimethylbenzyl)phenyl]benzotriazole; a benzotriazole compound having an aryl group substituted with a hydroxyl group and an alkoxy (C₁₋₁₂alkoxy) group, such as 2-(2'-hydroxy-4'-octoxyphenyl)benzotriazole; and others. The preferred benzotriazole-series compound includes a benzotriazole compound having a C₆₋₁₀aryl (particularly, phenyl) group substituted with a hydroxyl group and a C₃₋₆alkyl group, as well as a benzotriazole compound having an aryl group substituted with a hydroxyl group and a C₆₋₁₀aryl-C₁₋₆alkyl (particularly, phenyl-C₁₋₄alkyl) group.

Exemplified as the benzophenone-series compound (b) is a benzophenone compound having a plurality of hydroxyl groups (e.g., a di- to tetrahydroxybenzophenone such as 2,4-dihydroxybenzophenone; a benzophenone compound having a hydroxyl group, and an aryl or aralkyl group substituted with a hydroxyl group, such as 2-hydroxy-4-oxybenzylbenzophenone); a benzophenone compound having a hydroxyl group and an alkoxy (C₁₋₁₆alkoxy) group (e.g., 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone, and 2-hydroxy-4-methoxy-5-sulfobenzophenone); and others. The preferred benzophenone-series compound includes a benzophenone compound having a hydroxyl group, and a C₆₋₁₀aryl (or C₆₋₁₀aryl-C₁₋₄alkyl) group substituted with a hydroxyl group, particularly one having a hydroxyl group, and a phenyl-C₁₋₂alkyl group substituted with a hydroxyl group.

The aromatic benzoate-series compound (c) includes, for example, an alkylphenylsalicylate such as p-t-butylphenylsalicylate or p-octylphenylsalicylate.

Exemplified as the cyanoacrylate-series compound (d) is a cyano group-containing diphenylacrylate such as 2-ethylhexyl-2-cyano-3,3-diphenylacrylate or ethyl-2-cyano-3,3-diphenylacrylate.

The oxalic anilide-series compound (e) includes, for example, an oxalic diamide compound having a phenyl group on a nitrogen atom in which the phenyl group may have a substituent(s), exemplified by N-(2-ethylphenyl)-N'-(2-ethoxy-5-t-butylphenyl)oxalic diamide, and N-(2-ethylphenyl)-N'-(2-ethoxy-phenyl)oxalic diamide.

Examples of the hydroxyphenyl-1,3,5-triazine-series compound (f) include a diC₆₋₁₅aryl(hydroxy-C₁₋₂₀ alkoxyphenyl)-1,3,5-triazine such as 2,4-diphenyl-6-(2-hydroxyphenyl)-1,3,5-triazine, 2,4-diphenyl-6-(2,4-dihydroxyphenyl)-1,3,5-triazine, 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-6-(2-hydroxy-4-propoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-di-p-toluyl-6-(2-hydroxy-4-methoxyphenyl)-1,3,5-triazine, 2,4-di-p-toluyl-6-(2-hydroxy-4-propoxyphenyl)-1,3,5-triazine, 2,4-di-p-toluyl-6-(2-hydroxy-4-butoxyphenyl)-1,3,5-triazine, 2,4-di-p-toluyl-6-(2-hydroxy-4-hexyloxyphenyl)-1,3,5-triazine, 2,4-di-p-toluyl-6-(2-hydroxy-4-pentoxyphenyl)-1,3,5-triazine, 2,4-di-p-toluyl-6-(2-hydroxy-4-octyloxyphenyl)-1,3,5-triazine, 2,4-di(2,4-dimethylphenyl)-6-(2-hydroxy-4-methoxyphenyl)-1,3,5-triazine, 2,4-di(2,4-dimethylphenyl)-6-(2-hydroxy-4-propoxyphenyl)-1,3,5-triazine, 2,4-di(2,4-dimethylphenyl)-6-(2-hydroxy-4-butoxyphenyl)-1,3,5-triazine, or 2,4-di(2,4-dimethylphenyl)-6-(2-hydroxy-4-hexyloxyphenyl)-1,3,5-triazine; a diC₆₋₁₅aryl(hydroxy-C₆₋₁₀arylC₁₋₄ alkyloxyphenyl)-1,3,5-triazine such as 2,4-diphenyl-6-(2-hydroxy-4-benzyloxyphenyl)-1,3,5-triazine, 2,4-dip-toluyl-6-(2-hydroxy-4-benzyloxyphenyl)-1,3,5-triazine, or 2,4-di(2,4-dimethylphenyl)-6-(2-hydroxy-4-benzyloxyphenyl)-1,3,5-triazine; and a diC₆₋₁₅ aryl(hydroxy-C₁₋₁₀alkoxyethoxy-phenyl)-1,3,5-triazine such as 2,4-diphenyl-6-(2-hydroxy-4-(2-butoxyethoxy)phenyl)-1,3,5-triazine, or 2,4-di-p-toluyl-6-(2-hydroxy-4-(2-hexyloxyethoxy)phenyl)-1,3,5-triazine.

### (g) Hindered amine-series compound

The hindered amine-series compound includes a compound exemplified in the paragraph of the antioxidant, and others.

The weather (light)-resistant stabilizers may be used singly, or used in combination of the same or different kind of compounds. In the weather-resistant stabilizer, it is preferred to use the hindered amine-series compound (g) in combination with at least one member selected from other weather (light)-resistant stabilizers (a) to (f). In particular, it is preferred to use the benzotriazole-series compound (a) and the hindered amine-series compound (f) in combination. The proportion of the hindered amine-series compound relative to other weather-resistant stabilizer (in particular the benzotriazole-series compound) [the former/the latter (weight ratio)] is, for example, about 0/100 to 80/20, preferably about 10/90 to 70/30, and more preferably about 20/80 to 60/40.

### (Proportion of stabilizer)

The proportion of the stabilizer may be selected depending on the kind (or species) thereof. For example, the proportion of the antioxidant (in particular, the hindered phenol-series compound and/or the hindered amine-series compound) is about 0.001 to 5 parts by weight, preferably about 0.005 to 3 parts by weight, and more preferably about 0.01 to 2 parts by weight, relative to 100 parts by weight of the polyacetal copolymer.

The proportion of the processing stabilizer is about 0.001 to 10 parts by weight, preferably about 0.01 to 5 parts by weight (e. g., about 0.03 to 3 parts by weight), and particularly about 0.03 to 2 parts by weight, relative to 100 parts by weight of the polyacetal resin.

The proportion of the heat stabilizer is, for example, about 0.001 to 10 parts by weight and preferably about 0.001 to 5 parts by weight (in particular, about 0.01 to 2 parts by weight), relative to 100 parts by weight of the polyacetal resin.

The content of the weather (light)-resistant stabilizer may for example be about 0 to 5 parts by weight (e.g., about 0.01 to 5 parts by weight), preferably about 0.1 to 4 parts by weight, and more preferably about 0.1 to 2 parts by weight, relative to 100 parts by weight of the polyacetal copolymer.

Moreover, the proportion of each stabilizer (the antioxidant, the processing stabilizer, the heat stabilizer or the weather-resistant stabilizer) relative to the formaldehyde emission inhibitor [the former/the latter (weight ratio)] may be about 99/1 to 1/99, preferably about 98/2 to 2/98, and more preferably about 95/5 to 10/90.

If necessary, the polyacetal resin composition of the present invention may further comprise a conventional additive, for example, an impact resistance improver (or an impact modifier) or a gloss reducing agent (or gloss-reducing agent), an agent for improving sliding property (or a slide improver), a coloring agent (or a colorant), a filler, an odor-eliminating agent (or a deodorizing agent) (e.g., an odor-eliminating agent of an amine-series compound), a nucleating agent (e.g., a talc, and boron nitride), an antistatic agent, a flame retardant, a surfactant, an antibacterial agent, an antifungal agent, an aromatic agent, a foaming agent, a compatibilizing agent, an agent for improving properties (e.g., boric acid or a derivative thereof), a flavoring, and various polymers [for example, an acrylic resin (e.g., a homo- or copolymer of a C₁₋₁₀alkyl (meth)acrylate such as a poly(methyl methacrylate)), a polycarbonate-series resin, a polyolefinic resin, a polyvinyl alcohol-series resin, and a polyester-series resin (e.g., a homo- or copolymer of an aliphatic polyester such as a poly(D-, L- or D/L-lactic acid), a polyglycolic acid, a poly(glycolic acid/lactic acid) copolymer)]. Among these additives, the impact resistance improver, the agent for improving sliding property, the coloring agent, and the filler are particularly preferred. These additives may be used singly or in combination.

### (Impact resistance improver or gloss reducing agent)

Examples of the impact resistance improver or the gloss reducing agent include an acrylic core-shell polymer [e.g., core-shell polymers described in Japanese Patent Application Laid-Open No. 26705/2000 (JP-2000-26705A)], a polyurethane-series resin (thermoplastic polyurethane), and a polyester-series resin (thermoplastic polyester). The amount of the impact resistance improver may for example be about 0 to 100 parts by weight (e.g., about 1 to 100 parts by weight), preferably about 2 to 75 parts by weight, and more preferably about 3 to 60 parts by weight, relative to 100 parts by weight of the polyacetal copolymer.

### (Agent for improving sliding property)

The agent for improving sliding property (or slide improver) includes an olefinic resin, a silicone-series resin, a fluorine-containing resin, and others. The amount of the slide improver may for example be about 0 to 50 parts by weight (e.g., about 0.1 to 50 parts by weight), preferably about 1 to 30 parts by weight, and more preferably about 3 to 20 parts by weight, relative to 100 parts by weight of the polyacetal copolymer.

### (Coloring agent)

The coloring agent includes various dyes or pigments. As the dye, a solvent dye is preferred, and includes, for example, an azo-series dye, an anthraquinone-series dye, a phthalocyanine-series dye or a naphthoquinone-series dye. The pigment may be an inorganic pigment or an organic pigment.

Exemplified as the inorganic pigment is a titanium-series (titanium-containing) pigment, a zinc-series (zinc-containing) pigment, a carbon black (e.g., a furnace black, a channel black, an acetylene black, and Ketjen black), an iron-series (iron-containing) pigment, a molybdenum-series (molybdenum-containing) pigment, a cadmium-series (cadmium-containing) pigment, a lead-series (lead-containing) pigment, a cobalt-series (cobalt-containing) pigment, and an aluminum-series (aluminum-containing) pigment.

The organic pigment is exemplified by an azo-series pigment, an anthraquinone-series pigment, a phthalocyanine-series pigment, a quinacridone-series pigment, a perylene-series pigment, a perinone-series pigment, an isoindoline-series pigment, a dioxazine-series pigment, or a threne-series pigment.

The coloring agent may be used singly, or a plurality of these coloring agents may used in combination. Among others, the use of a coloring agent having a high light-shielding effect [such as a carbon black, a titanium white (a titanium oxide) or a phthalocyanine-series pigment, particularly a carbon black] ensures improvement in weather (light)-resistance of the polyacetal resin composition.

The amount of the coloring agent is, for example, relative to 100 parts by weight of the polyacetal copolymer, about 0 to 5 parts by weight (e.g., about 0.01 to 5 parts by weight), preferably about 0.1 to 4 parts by weight, and more preferably about 0.1 to 2 parts by weight.

### (Filler)

The resin composition of the present invention may be further blended with one or combination of a conventional filler (such as a fibrous, plate-like or particulate filler) to improve properties of the shaped article. Examples of the fibrous filler include an inorganic fiber (e.g., a glass fiber, a carbon fiber, a boron fiber, and a potassium titanate fiber (whisker)), an organic fiber (e.g., an amide fiber), and others. As the plate-like filler, there may be mentioned a glass flake, a mica, a graphite, a variety of metal foil, and others. Examples of the particulate filler include a metal oxide (e.g., zinc oxide, and alumina), a sulfate (e.g., calcium sulfate, and magnesium sulfate), a carbonate (e.g., calcium carbonate), a glass (e.g., a milled fiber, a glass bead, and a glass balloon), a silicate (e.g., a talc, a kaolin, a silica, a diatomite, a clay, and a wollastonite), a sulfide (e.g., molybdenum disulfide, and tungsten disulfide), a carbide (e.g., graphite fluoride, and silicon carbide), an activated carbon, boron nitride, and others.

The amount of the filler is, for example, about 0 to 100 parts by weight (e.g., about 1 to 100 parts by weight), preferably about 3 to 80 parts by weight, and more preferably about 5 to 50 parts by weight, relative to 100 parts by weight of the polyacetal resin.

Examples of the typical polyacetal resin composition include resin compositions (1) to (5) having formulations as follows.
(1) a polyacetal resin composition comprising the specific polyacetal copolymer (e.g., a polyacetal copolymer having a terminal hemiformal group of 0.05 to 0.8 mmol/kg, a terminal formyl group of 0 to 1.5 mmol/kg, a proportion of the terminal hemiformal group relative to the terminal formyl group [the former/the latter (molar ratio)] of 100/0 to 10/90, an unstable terminal group of 0.01 to 0.4% by weight, and a melt index of 0.5 to 80 g/10 min.), and an aminotriazine compound (e.g., a guanamine-series compound).
(2) a polyacetal resin composition comprising the specific polyacetal copolymer (e.g., a polyacetal copolymer having a terminal hemiformal group of 0.05 to 0.8 mmol/kg, a terminal formyl group of 0 to 1.5 mmol/kg, a proportion of the terminal hemiformal group relative to the terminal formyl group [the former/the latter (molar ratio)] of 100/0 to 10/90, an unstable terminal group of 0.01 to 0.4% by weight, and a melt index of 0.5 to 80 g/10 min.), and a urea compound (e.g., a linear (or chain) or cyclic urea compound).
   The above resin compositions (1) and (2) usually comprises an antioxidant (in particular a hindered phenol-series compound), a processing stabilizer (e.g., a long-chain or higher fatty acid ester, a long-chain or higher fatty acid amide, and a polyoxyalkylene glycol), and a heat stabilizer (e.g., a metal salt of an organic carboxylic acid, and an alkaline or alkaline earth metal compound) in many cases. Moreover, the above resin compositions (1) and (2) may further comprise a weather-resistant stabilizer (e.g., a hindered amine-series compound, or a benzotriazole-series compound and a hindered amine-series compound).
(3) a polyacetal resin composition comprising the specific polyacetal copolymer (e.g., a polyacetal copolymer having a terminal hemiformal group of 0.05 to 0.8 mmol/kg, a terminal formyl group of 0 to 1.5 mmol/kg, a proportion of the terminal hemiformal group relative to the terminal formyl group [the former/the latter (molar ratio)] of 100/0 to 10/90, an unstable terminal group of 0.01 to 0.4% by weight, and a melt index of 0.5 to 80 g/10 min.) and an amino acid compound (e.g., an α-amino acid); preferably a polyacetal resin composition comprising an amino acid compound alone as the formaldehyde emission inhibitor.
(4) a polyacetal resin composition comprising the specific polyacetal copolymer (e.g., polyacetal copolymer having a terminal hemiformal group of 0.05 to 0.8 mmol/kg, a terminal formyl group of 0 to 1.5 mmol/kg, a proportion of the terminal hemiformal group relative to the terminal formyl group [the former/the latter (molar ratio)] of 100/0 to 10/90, an unstable terminal group of 0.01 to 0.4% by weight, and a melt index of 0.5 to 80 g/10 min.) and a hydrazine compound (e.g., an aliphatic carboxylic acid hydrazide-series compound, an alicyclic carboxylic acid hydrazide-series compound, an aromatic carboxylic acid hydrazide-series compound, and a polymeric carboxylic acid hydrazide-series compound); preferably a polyacetal resin composition comprising a hydrazine compound alone as the formaldehyde emission inhibitor.
(5) a polyacetal resin composition comprising the specific polyacetal copolymer (e.g., polyacetal copolymer having a terminal hemiformal group of 0.05 to 0.8 mmol/kg, a terminal formyl group of 0 to 1.5 mmol/kg, a proportion of the terminal hemiformal group relative to the terminal formyl group [the former/the latter (molar ratio)] of 100/0 to 10/90, an unstable terminal group of 0.01 to 0.4% by weight, and a melt index of 0.5 to 80 g/10 min.) and an amide compound (in particular a polyamide-series resin).

The above resin composition (5) may comprise another basic nitrogen-containing compound (e.g., an aminotriazine compound, a urea compound (such as biurea), and a hydrazine compound) in addition to the amide compound. Moreover, the resin composition usually further comprises an antioxidant (particularly, a hindered phenol-series compound) and a processing stabilizer (e.g., a long-chain fatty acid ester, a long-chain fatty acid amide, and a polyoxyalkylene glycol) in many cases.

Among these resin compositions, the resin composition (2) or (4), in which the urea compound or the hydrazine compound is used as a formaldehyde emission inhibitor, remarkably inhibits the amount of formaldehyde emission (amount of formaldehyde emission under dry conditions and humid conditions). For example, as mentioned below, it is possible that the amount of the formaldehyde emission from a shaped article in dry (and humid) conditions is reduced to a level not more than 0.1 µg per one cm² (in the humid conditions, to a level not more than 0.2 µg per one cm²) by adjusting the kind of the polyacetal copolymer (e.g., a concentration of a terminal group) or the proportion of an inhibitor, and further the combination with other additive (e.g., a hindered phenol-series compound).

Incidentally, in these resin compositions (1) to (5), the polyacetal copolymer may be a resin (or composition) comprising an additive (e.g., a basic nitrogen-containing compound such as a polyamide-series resin, an antioxidant such as a hindered phenol-series compound or a hindered amine-series compound, a processing stabilizer, a heat stabilizer, and a weather-resistant stabilizer) beforehand, as mentioned above.

Moreover, the resin compositions (1) to (5) may comprise component(s) such as the core-shell polymer, the carboxyl group-containing compound, the ionomer resin, or the modified phenol resin. However, the resin composition of the present invention can efficiently inhibit emission of formaldehyde without containing the above component(s).

### (Production process of polyacetal resin composition)

The polyacetal resin composition may be a particulate mixture or a molten mixture, and it may be prepared by mixing a polyacetal copolymer with a formaldehyde emission inhibitor (hereinafter, sometimes simply refers to as an inhibitor), and if necessary, with other additive(s) [for example, an antioxidant (e.g., a hindered phenol-series compound, and a hindered amine-series compound), a processing stabilizer, a heat stabilizer, a weather (light)-resistant stabilizer, an impact resistance improver, a slide improver, a coloring agent, and a filler], in a conventional manner. Incidentally, in the particulate mixture, it is sufficient that the polyacetal copolymer particulate (in particular pellet) coexists with the inhibitor. The term "coexist" means that the inhibitor is allowed to be present in the neighborhood of the polyacetal copolymer particulate (or pellet). The preferred method for allowing the polyacetal copolymer particulate (or pellet) to "coexist" with the inhibitor includes a method which comprises allowing a polyacetal copolymer particulate (or pellet) to coexist with an inhibitor or a master batch containing an inhibitor, for example, a method which comprises allowing an inhibitor to attach to a particulate of a polyacetal copolymer (in particular a stabilized polyacetal copolymer), and a method which comprises adding (or mixing) a polyacetal copolymer particulate to (or with) a particulate inhibitor (e.g., a particulate master batch) to give a particulate mixture.

The concrete preparation method of the polyacetal resin composition (or the shaping or molding method of the polyacetal resin composition) includes, for example, (1) a method comprising feeding (or supplying) all components through a main feed port (or a main supply port), kneading and extruding the fed components by using an extruder to prepare pellets, and molding the pellets; (2) a method comprising feeding component(s) containing no inhibitor (e.g., component(s) such as a polyacetal copolymer, a stabilizer or other additive(s)) through a main feed port and feeding component(s) containing at least an inhibitor (e.g., components containing a polyacetal copolymer, a stabilizer and/or other additive(s) in addition to the inhibitor) from a side feed port, kneading and extruding the fed components by using an extruder to prepare pellets, and molding the pellets; (3) a method comprising feeding component(s) containing part of an inhibitor (e.g., components containing a polyacetal copolymer, a stabilizer, and/or other additive(s) in addition to the inhibitor) through a main feed port and feeding component(s) containing the residual component(s) or other kind of inhibitor (e.g., components containing a polyacetal copolymer, a stabilizer, and/or other additive(s)) through a side feed port, kneading and extruding the fed components by using an extruder to prepare pellets, and molding the pellets; (4) a method comprising once making pellets (master batch) different in formulation from the aimed article, mixing (diluting) the pellets in a certain proportion with other component(s), and molding the resulting pellets to give a shaped article having a predetermined formulation; (5) a method comprising attaching an inhibitor to a polyacetal copolymer pellet by spraying or other means, and then molding the resulting matter into a shaped article having a predetermined formulation; (6) a method comprising kneading and extruding a polyacetal copolymer (which may comprise a coloring agent) by using a uniaxial or biaxial extruder to prepare pellets, and adding and mixing (or dredging) an inhibitor particulate to (or with) the pellets, and molding the resulting matter; and others.

In particular, in the above preparation methods of the polyacetal resin composition, (1), (2) and (3), it is preferred to melt-mix (melt-knead) components to prepare the polyacetal resin composition by using an extruder (uniaxial or biaxial extruder) having exhaust port(s) (e.g., exhaust vent port(s)) of not less than 1. Moreover, in the methods (2) and (3) comprising feeding part or all of the formaldehyde emission inhibitor through the middle part of the extruder (that is, side-feeding), it is possible to side-feed the inhibitor through the neighborhood of the exhaust port (e.g., the upstream or the downstream from the exhaust port). Further, in the extruding and preparing step (or melt-mixing step), the amount of formaldehyde emitted from the obtained shaped (or molded) article can be further reduced by a preparation method comprising adding a processing auxiliary [for example, at least one member selected from the group consisting of water, and an alcohol (e.g., a C₁₋₄alcohol such as methanol, ethanol, isopropyl alcohol or n-propyl alcohol)], for example preblending or infusing the processing auxiliary through a feed port of the upstream of an exhaust vent port, and exhausting and removing volatile component(s) containing the processing auxiliary from the exhaust port (e.g., exhaust vent port). The amount of water and/or the alcohol to be added as such a processing auxiliary is usually about 0 to 20 parts by weight, preferably about 0.01 to 10 parts by weight, and more preferably about 0.1 to 5 parts by weight, relative to 100 parts by weight of the polyacetal copolymer.

In particular, in the case of melt-mixing the polyacetal copolymer and the formaldehyde emission inhibitor (in particular, at least one formaldehyde emission inhibitor selected from the group consisting of a urea compound and a hydrazide-series compound) by using an extruder, since the formaldehyde-trapping rate of the formaldehyde emission inhibitor (in particular, a urea compound, or a hydrazide-series compound) is high and, in contrast, the formaldehyde-trapping amount is limited, the preferably used method is an extruding and preparing method comprising side-feeding the formaldehyde emission inhibitor through a side feed port of the extruder, and/or an extruding and preparing method comprising setting up a melt-kneading or melt-mixing time (residence time of the components) in the extruder as a short time (e.g., not longer than 300 seconds, preferably not longer than 250 seconds, more preferably not longer than 200 seconds, and particularly about 10 to 150 seconds).

Incidentally, in the preparation of a composition for use in a shaped article, mixing of a powdered (particulate) polyacetal copolymer as a substrate (e.g., a powder (particulate) obtained by grinding a part or all of the polyacetal resin) with other components (e.g., a formaldehyde emission inhibitor, a hindered phenolic compound, a processing stabilizer, a heat stabilizer, a weather (light)-resistant stabilizer, an impact resistance improver or a gloss reducing agent, a slide improver, a coloring agent and a filler) followed with melt-kneading improves the degree of dispersion of the additives and therefore is advantageous.

The polyacetal resin composition of the present invention realizes that the emission of formaldehyde due to oxidation or thermal decomposition or the like of the polyacetal copolymer is remarkably restrained or inhibited and that the working environment is improved or ameliorated particularly in the molding and processing (particularly, a melt-molding and processing) step. Moreover, deposition of decomposition products or additives on the mold (mold deposit), blooming or bleeding of such products or additives from a shaped article can be remarkably restricted or inhibited, and various problems on the molding and processing step can be overcome. Therefore, the resin composition of the present invention is useful in fabricating a variety of shaped articles by such a conventional molding method as injection molding, extrusion molding, compression molding, blow molding, vacuum molding, foam molding, rotation molding, and gas injection molding.

### (Shaped article)

The polyacetal resin article of the present invention formed from the above-mentioned polyacetal resin composition comprises (contains) a specific polyacetal copolymer and a formaldehyde emission inhibitor in combination, and has excellent stability in an extrusion and/or molding process with having extremely small amount of emission (or generation) of formaldehyde. In other words, shaped articles molded from the conventional polyacetal resins containing antioxidants and other stabilizers liberate relatively large amounts of formaldehyde, cause corrosion and discoloration, and contaminate the living and working environment. For example, the formaldehyde emission from commercial ordinary polyacetal resin articles is about 2 to 5 µg per one cm² of surface area under dry conditions (in a constant-temperature dry atmosphere) and about 3 to 6 µg per one cm² of surface area under humid conditions (in a constant-temperature moisture-laden atmosphere).

On the other hand, the polyacetal resin composition of the present invention effectively reduces in the amount of formaldehyde emission from a shaped article by adding the formaldehyde emission inhibitor in an amount less than in conventional resins. Further, the amount of formaldehyde emission can be inhibited to the level unreached previously by adding at least one formaldehyde emission inhibitor selected from the group consisting of the aminotriazine compound, the urea compound and the hydrazine compound or by using the amide compound in combination with the inhibitor(s).

More specifically, in dry conditions, the formaldehyde emission is not more than 1.5 µg per one cm² of surface area of the shaped article under dry conditions, preferably not more than 1.0 µg (e.g., about 0 to 1. 0 µg), more preferably about not more than 0.6 µg (e.g., about 0 to 0.6 µg), and usually about 0.001 to 1.0 µg. In particular, it is possible to achieve the amount of formaldehyde emission, for example, not more than 0.1 µg, e.g., about 0 to 0.09 µg, preferably about 0.005 to 0.09 µg (e.g., about 0.008 to 0.09 µg), and more preferably about 0.005 to 0.08 µg, per one cm² of surface area of the shaped article, by particularly adjusting the kind of polyacetal copolymer, a combination of a formaldehyde emission inhibitor to be used or other additive(s) (e.g., a hindered phenol-series compound, a processing stabilizer, and a heat stabilizer), or a proportion thereof.

Moreover, in humid conditions, the formaldehyde emission is not more than 2.5 µg (about 0 to 2 µg) per one cm² of surface area of the shaped article, preferably not more than 1.2 µg (e.g., about 0 to 1.2 µg), more preferably not more than 0.4 µg (e.g. , about 0 to 0.4 µg), particularly about 0 to 0.2 µg, and usually about 0.001 to 1.2 µg. In particular, it is possible to achieve the amount of formaldehyde emission, for example, not more than 0.2 µg, e.g., about 0 to 0.15 µg, preferably about 0.005 to 0.1 µg (e.g., about 0.01 to 0.1 µg), and more preferably about 0.005 to 0.09 µg, per one cm² of surface area of the shaped article, by particularly adjusting the kind of the polyacetal copolymer, a combination of a formaldehyde emission inhibitor to be used or other additive(s) (e.g., a hindered phenol-series compound), or a proportion thereof.

The shaped article of the polyacetal resin according to the present invention should show the above-mentioned formaldehyde emission under either dry conditions or humid conditions. In particular, a shaped article showing the above formaldehyde emission level under both dry and humid conditions is preferably used as a material which can be adopted to more severe environment.

The formaldehyde emission under dry conditions can be determined as follows.

After the shaped article of polyacetal resin is cut if necessary and its surface area is measured, a suitable portion of the article (e.g. the amount equivalent to a surface area of about 10 to 50 cm²) is placed in a vessel (20 ml capacity) to seal and stand (or maintained) at a temperature of 80°C for 24 hours. Then, this sealed vessel is charged with 5 ml of water and the formaldehyde in the aqueous solution is assayed in accordance with JIS K0102, 29 (under the heading of Formaldehyde) to calculate the formaldehyde emission per unit surface area of the shaped article (µg/cm²).

The formaldehyde emission under humid conditions can be determined as follows.

After the shaped article of a polyacetal resin is cut if necessary and its surface area is measured, a suitable portion of the shaped article (e.g. the amount equivalent to a surface area of about 10 to 100 cm²) is suspended from the lid of a sealable vessel (1 L capacity) containing 50 ml of distilled water. After seal of the vessel, the vessel is allowed to stand (or maintained) in a constant temperature oven at 60°C for 3 hours. Thereafter, the vessel is allowed to stand at room temperature for 1 hour and the formaldehyde in the aqueous solution within the vessel is assayed in accordance with JIS K0102, 29 (under the heading of Formaldehyde) to calculate the formaldehyde emission per unit surface area of the article (µg/cm²).

The above quantitative limitation on formaldehyde emission in the present invention is valid as for a the polyacetal copolymer having a specific quality and the specific formaldehyde emission inhibitor are contained not only for shaped articles available from polyacetal resin compositions comprising the conventional additives (conventional stabilizer, releasing agent, etc.), but also for shaped articles molded from comparable resin compositions containing an inorganic filler and/or other polymers, even if only a major part of the surface of the article (for example, 50 to 100% of the total surface area) is constituted by the polyacetal resin (for example, a multi-colored article or a coated article).

The shaped article according to the present invention finds application in any field of use where formaldehyde is objectionable (for example, knobs and levers for use as bicycle parts) and can also be used advantageously as parts and members in a variety of fields inclusive of automotive parts, electrical and electronic component (driving component and driven component) parts, architectural members and pipeline installation parts, household and cosmetic product parts, and medical device (for diagnostic or therapeutic use) parts.

More specifically, the automotive parts include but are not limited to car interior parts such as the inner handle, fuel trunk opener, seat belt buckle, assist lap, various switches, knob, lever, and clip; electrical system parts such as meters and connectors; in-vehicle electrical and electronic parts or mountings related to audio equipment and car navigation equipment, parts in contact with metals, typically the window regulator carrier plate, mechanical parts such as door lock actuator parts, mirror parts, wiper motor system parts, and fuel system parts.

The electrical or electronic component parts (the mechanical parts) includes, for example, parts or members constituted with shaped articles of polyacetal resin articles and fitted with a number of metal contacts [e.g. audio equipments such as the cassette tape recorder, video equipment such as the video tape recorder (VTR), 8 mm or other video camera, etc., office automation (OA) equipment such as copying machines, facsimile, word processor, computer, toys actuated by the driving force of an electric motor or a spring, a telephone, a keyboard as an accessory to a computer or the like].

To be specific, there can be mentioned the chassis, gear, lever, cam, pulley, and bearing. Furthermore, the invention is applicable to optical and magnetic recording medium parts at least partly made of molded polyacetal resin (e.g. metal thin-film magnetic tape cassette, magnetic disk cartridge, opticomagnetic disc cartridge, etc.) and more particularly, the metal tape cassette for music, digital audio tape cassette, 8 mm video tape cassette, floppy (R) disk cartridge, minidisk cartridge, etc. As specific optical and magnetic medium parts, there can be mentioned tape cassette parts (tape cassette body, reel, hub, guide, roller, stopper, lid, etc.) and disk cartridge parts (disk cartridge body (case), shutter, cramping plate, etc.).

In addition, the shaped article of a polyacetal resin according to the present invention can be used with advantage in architectural members and pipeline parts such as lighting equipment parts, interior architectural members (such as fittings, fixtures, furnishings), piping, cock, faucet, rest room (lavatory)-related parts, etc., a broad range of products related to daily living, cosmetic products, and medical devices, for example fastener (such as slide fastener, snap fastener, hoop-and-loop fastener, rail fastener), stationery, chapstick or lipstick cases, cleansing device, water cleaner, spray nozzle, spray device or container, aerosol container, general vessels, syringe holder, and so on.

Since the polyacetal resin composition of the present invention comprises (contains) a high quality polyacetal copolymer and a formaldehyde emission inhibitor, the polyacetal resin composition achieves extensive improvement of thermal stability in a shaping or molding process of the polyacetal copolymer. Moreover, addition of a small amount of the above-mentioned inhibitor enables to suppress or inhibit formaldehyde emission from the polyacetal resin and an article thereof, resulting in the emission at an extremely low level, and enables to excellently improve the circumferential environment (e.g., working environment and using environment). Furthermore, the polyacetal resin composition of the present invention can inhibit emission of formaldehyde even under severe conditions to suppress: deposition of decomposition products on the mold (mold deposit); blooming or bleeding of such products from a shaped article; and thermal aging or deterioration of the article, thus contributing to upgrading of the quality and moldability of the shaped article.

Furthermore, blending of other additive(s) (e.g., an antioxidant such as a hindered phenol-series compound or a hindered amine-series compound, a processing stabilizer, a heat stabilizer, a weather (light)-resistant stabilizer, an impact resistance improver, a slide improver, a coloring agent, and a filler) inhibits the amount of formaldehyde emission at an extremely low level, and ensures to obtain a polyacetal resin composition and a shaped article formed from the composition, which are improved in properties such as weather (light)-resistance, impact resistance and sliding property.

The present invention is preferably applicable for any field of use where formaldehyde is objectionable, e.g., for automotive parts, electrical and electronic component parts, architectural members and pipeline installation parts, household and cosmetic product parts, and medical device (for diagnostic or therapeutic use) parts.

### EXAMPLES

The following examples are intended to describe this invention in further detail and should by no means be interpreted as defining the scope of the invention.

Incidentally, referring to the examples and comparative examples, the amount of emission of formaldehyde from the shaped (or molded) articles under dry and humid (wet) conditions was evaluated by the following methods.

### [Amount of formaldehyde emission from shaped article in dry conditions]

Each resin sample consisting of 10 test pieces (one test piece: 2 mm x 2 mm x 50 mm; total surface area: about 40 cm²) was placed in a vessel (capacity 20 ml) to seal and heated in a constant temperature oven at 80°C for 24 hours. After air-cooling to room temperature, 5 ml of distilled water was injected into the vessel using a syringe. The formaldehyde content of this aqueous solution was determined in accordance with JIS K0102, 29 (under the heading of Formaldehyde) and the formaldehyde gas emission per surface area (µg/cm²) was calculated.

### [Amount of formaldehyde emission from shaped article in humid conditions]

A plate test piece (100 mm x 40 mm x 2 mm; total surface area of 85.6 cm²) was suspended from the stopper or lid of a polyethylene bottle (capacity 1 L) containing 50 ml of distilled water. The bottle was sealed to stand in a constant temperature oven at 60°C for 3 hours, followed by standing for 1 hour at room temperature. The formaldehyde content of the aqueous solution in the bottle was determined in accordance with JIS K0102, 29 (under the heading of Formaldehyde) and the formaldehyde gas emission per surface area of the article (µg/cm²) was calculated.

### Examples 1 to 9, 12 to 18, 21, 22, 25, 26, and 28 to 30

To 100 parts by weight of a polyacetal copolymer having a polymer characteristic represented by a specific index were preblended (or premixed) a formaldehyde emission inhibitor, an antioxidant, a processing stabilizer, a heat stabilizer, a coloring agent, a weather (light)-resistant stabilizer and a processing auxiliary (water) in the proportions indicated in Tables 1 and 2. Concerning each of thus obtained mixtures, the mixture was supplied through a main feed port of a biaxial extruder (30 mm diameter) having one vent port, and melt-mixed (extrusion condition: L/D=35, extrusion temperature: 200°C, screw rotation frequency: 100 rpm, vent vacuum: 70 cmHg, discharging rate: 15 kg/hr, and residence time: 100 seconds) to prepare a pelletized composition.

### Examples 10, 11, 19, 20, 27, 31, and 32

With 95 parts by weight of a polyacetal copolymer having a polymer characteristic represented by a specific index were mixed an antioxidant, a processing stabilizer, a heat stabilizer, a weather (light)-resistant stabilizer and a coloring agent in the proportions indicated in Tables 1 and 2 to prepare preblended materials. Concerning each of thus obtained preblended materials, the material was supplied through a main feed port of a biaxial extruder (30 mm diameter) having one vent port, and melt-mixed (extrusion condition: L/D=35, extrusion temperature: 200°C, screw rotation frequency: 100 rpm, vent vacuum: 70 cmHg, discharging rate: 15 kg/hr, and residence time: 100 seconds) and additionally a blended material containing 5 parts by weight of a polyacetal copolymer particulate having a polymer characteristic represented by a specific index and a formaldehyde emission inhibitor was side-fed through a side-feed port in the downstream of the vent port in the extruder to prepare a pelletized composition.

From thus obtained pellets, prescribed test pieces were fabricated with an injection molding machine, and the amount of formaldehyde emission from each of the prescribed test pieces was measured. The results are shown in Tables 1 to 3.

### Examples 23 and 24

One hundred (100) parts by weight of a polyacetal copolymer pellet having a polymer characteristic represented by a specific index and a formaldehyde emission inhibitor were put in a polyethylene bag in the proportions indicated in Table 2 and blended to prepare mixed pellet compositions. From the pellet compositions, the prescribed test pieces were fabricated with an injection molding machine, and the amount of formaldehyde emission from each of the prescribed test pieces was measured. The results are shown in Table 3.

### Example 33

The pellet of the polyacetal resin composition obtained in Example 8 was supplied through a main feed port of a biaxial extruder (30 mm diameter) having one vent port, and melt-mixed (extrusion condition: L/D=35, extrusion temperature: 200°C, screw rotation frequency: 100 rpm, vent vacuum: 70 cmHg, and discharging rate: 15 kg/hr). This procedure was performed twice to give a pelletized composition (total residence time: 300 seconds).

From the pellet, a prescribed test piece was fabricated with an injection molding machine, and the amount of formaldehyde emission from the prescribed test piece was measured. The amount of formaldehyde emission was 0.23 µg/cm² in the dry condition and 0.50 µg/cm² in the humid condition.

### Example 34

The extrusion treatment was conducted in the same manner as in Example 33 except for using the pellet of the polyacetal resin composition obtained in Example 13 instead of the pellet of the polyacetal resin composition obtained in Example 8 to give a pelletized composition melt-kneaded for a prolonged period (total residence time: 300 seconds). From the pellet, a prescribed test piece was fabricated with an injection molding machine, and the amount of formaldehyde emission from the prescribed test piece was measured. The amount of formaldehyde emission was 0.55 µg/cm² in the dry conditions and 0.85 µg/cm² in the humid conditions.

### Comparative Examples 1 to 8

For comparison, the following samples were evaluated as described above: samples prepared without addition of formaldehyde emission inhibitors, and samples prepared with or without addition of a formaldehyde emission inhibitor to a polyacetal copolymer different in index of polymer characteristic from the above examples. The results are shown in Table 4.

The polyacetal copolymers, the formaldehyde emission inhibitors, the hindered phenol-series compounds, the hindered amine-series compounds, the processing stabilizers, the heat stabilizers, the coloring agents and weather (light)-resistant stabilizers used in the Examples and Comparative Examples are as follows.

### 1. Polyacetal copolymer "a"

(a-1): Polyacetal copolymer [a polyacetal copolymer having a terminal hemiformal group of 0.35 mmol/kg, a terminal formyl group of 0.1 mmol/kg, an unstable terminal group of 0.12% by weight and a melt index of 9 g/10 min.]
(a-2): Polyacetal copolymer [a polyacetal copolymer containing 0.03% by weight of triethylene glycol bis[3-(3-t-butyl-5-methyl-4-hydroxyphenyl)propionate], and having a terminal hemiformal group of 0.35 mmol/kg, a terminal formyl group of 0. 7 mmol/kg, an unstable terminal group of 0.23% by weight and a melt index of 9 g/10 min.]
(a-3): Polyacetal copolymer [a polyacetal copolymer containing 0.05% by weight of pentaerythritol tetrakis[3-(3,5-di-t-butyl-4-hydroxyphenyl)propionate], and having a terminal hemiformal group of 0.40 mmol/kg, a terminal formyl group of 1.0 mmol/kg, an unstable terminal group of 0.20% by weight and a melt index of 9 g/10 min.]
(a-4): Polyacetal copolymer [a polyacetal copolymer containing 0.2% by weight of bis(1,2,2,6,6-pentamethyl-4-piperidyl)sebacate, and having a terminal hemiformal group of 0.52 mmol/kg, a terminal formyl group of 1.3 mmol/kg, an unstable terminal group of 0.24% by weight and a melt index of 9 g/10 min.]
(a-5): Polyacetal copolymer [a polyacetal copolymer containing 0.3% by weight of triethylene glycol bis[3-(3-t-butyl-5-methyl-4-hydroxyphenyl)propionate], 0.05% by weight of a nylon 66 resin having a mean particle size of 3 µm, 0.05% by weight of calcium stearate and 0.05% by weight of ethylene glycol distearate, and having a terminal hemiformal group of 0.53 mmol/kg, a terminal formyl group of 0.4 mmol/kg, an unstable terminal group of 0.15% by weight and a melt index of 9 g/10 min.]
(a-6): Polyacetal copolymer [a polyacetal copolymer containing 0.3% by weight of triethylene glycol bis[3-(3-t-butyl-5-methyl-4-hydroxyphenyl)propionate], 0.05% by weight of nylon 6-66-610 resin (manufactured by Du Pont, "Elvamide 8063R"), 0.10% by weight of calcium citrate and 0.20% by weight of ethylene distearyl amide, and having a terminal hemiformal group of 0.29 mmol/kg, a terminal formyl group of 0.4 mmol/kg, an unstable terminal group of 0.15% by weight and a melt index of 9 g/10 min.]
(a-7): Polyacetal copolymer [a polyacetal copolymer containing 0.05% by weight of pentaerythritol tetrakis[3-(3,5-di-t-butyl-4-hydroxyphenyl)propionate], and having a terminal hemiformal group of 0.82 mmol/kg, a terminal formyl group of 2.4 mmol/kg, an unstable terminal group of 0.52% by weight and a melt index of 9 g/10 min.]

Incidentally, an amount of a terminal hemiformal group and that of a terminal formyl group in a polyacetal copolymer were shown as values (mmol/kg) determined in accordance with a manner described in Japanese Patent Application Laid-Open No. 11143/2001 (JP-2001-11143A) using an AVANCE400-type FT-NMR apparatus (manufactured by Bruker).

Moreover, the melt index was shown as a value (g/ 10 min.) determined under conditions of 190°C and 2169g, based on ASTM-D1238.

### 2. Formaldehyde emission inhibitor "b"

(b-1): Benzoguanamine
(b-2): CTU-guanamine [manufactured by Ajinomoto Fine-Techno Co., Inc.]
(b-3): Phthaloguanamine
(b-4): 2,4-Diamino-6-(2'-undecylimidazolyl-1')-ethyls-triazine [manufactured by Shikoku Chemicals Corp., "CUREZOL C11Z-A"]
(b-5): Biurea
(b-6): L-Histidine
(b-7): Allantoin
(b-8): Stearic hydrazide
(b-9): 1,4-Cyclohexanedicarboxylic acid dihydrazide
(b-10): Dodecanoic diacid dihydrazide
(b-11): 2,6-Naphthalenedicarboxylic acid dihydrazide
(b-12): Polyacrylic hydrazide [manufactured by Otsuka Chemical Co., Ltd., APA]
(b-13): Nylon 6-66-610 [manufactured by Du Pont, "Elvamide 8063R"]
(b-14): Hydrotalcite supporting 10% by weight of sebacic dihydrazide [hydrotalcite (manufactured Kyowa Chemical Industry Co., Ltd., "DMT-4A")]

### 3. Hindered phenol-series compound "c"

(c-1): Triethylene glycol bis[3-(3-t-butyl-5-methyl-4-hydroxyphenyl)propionate]
(c-2): Pentaerythritol tetrakis[3-(3,5-di-t-butyl-4-hydroxyphenyl)propionate]
(c-3): 2,2'-Methylenebis(4-methyl-6-t-butylphenol)

### 4. Processing stabilizer "d"

(d-1): Ethylene bis-stearyl amide
(d-2): Montanate [manufactured by Toyo-Petrolite Co., Ltd., "LUZA WAX-EP"]
(d-3): Polyethylene oxide [number average molecular weight: 35000]

### 5. Heat stabilizer (organic carboxylic acid, metal salt of organic carboxylic acid, alkaline earth metal salt) "e"

(e-1): Calcium 12-hydroxystearate
(e-2): Magnesium stearate
(e-3): Magnesium oxide
(e-4): Calcium citrate
(e-5): Ionomer [manufactured by Du Pont-Mitsui Polychemicals Co., Ltd., "Himilan 1702"]
(e-6): Ethylene-methacrylic acid copolymer [manufactured by Du Pont-Mitsui Polychemicals Co., Ltd., "NUCREL N0908C"]

### 6. Coloring agent "f"

(f-1): Carbon black (acetylene black)
(f-2): Titanium oxide

### 7. Weather (light)-resistant stabilizer "g"

(g-1): 2-[2'-Hydroxy-3',5'-bis(α,α-dimethylbenzyl)phenyl]benzotriazole
(g-2): Bis(2,2,6,6-tetramethyl-4-piperidyl)sebacate

### 8. Processing auxiliary "h"

(h-1): Distilled water

**Table 1**

| | Examples | | | | | | | | | | |
|---|---|---|---|---|---|---|---|---|---|---|---|
| | 1 | 2 | 3 | 4 | 5 | 6 | 7 | 8 | 9 | 10 | 11 |
| Polyacetal copolymer "a" | a-1 | a-1 | a-2 | a-2 | a-2 | a-2 | a-2 | a-2 | a-2 | a-2 | a-2 |
| (parts by weight) | 100 | 100 | 100 | 100 | 100 | 100 | 100 | 100 | 100 | 100 | 100 |
| Formaldehyde emission inhibitor "b" | b-1 | b-2 | b-1 | b-2 | b-2 | b-3 | b-4 | b-5 | b-6 | b-7 | b-8 |
| (parts by weight) | 1.0 | 0.5 | 0.8 | 0.3 | 0.3 | 0.3 | 0.3 | 0.1 | 0.2 | 0.05 | 0.1 |
| Antioxidant "c" | c-1 | c-2 | c-1 | c-1 | c-1 | c-1 | c-1 | c-1 | c-1 | c-1 | c-1 |
| (parts by weight) | 0.3 | 0.3 | 0.3 | 0.3 | 0.3 | 0.3 | 0.3 | 0.3 | 0.3 | 0.3 | 0.3 |
| Processing stabilizer "d" | d-1 | d-2 | d-1 | d-1 | d-1 | d-1 | d-1 | d-1 | d-1 | d-1 | d-1 |
| (parts by weight) | 0.2 | 0.2 | 0.2 | 0.2 | 0.2 | 0.2 | 0.2 | 0.2 | 0.2 | 0.2 | 0.2 |
| Heat stabilizer "e" | e-1 | e-1 | e-1 | e-1 | e-2 | e-2 | e-1 | e-3 | e-1 | e-3 | e-4 |
| (parts by weight) | 0.1 | 0.1 | 0.1 | 0.1 | 0.03 | 0.03 | 0.1 | 0.03 | 0.1 | 0.03 | 0.03 |
| Coloring agent "f" (parts by weight) | - | - | - | - | - | - | - | - | - | - | - |
| Weather (light)-resistant stabilizer "g" (parts by weight) | - | - | - | - | - | - | - | - | - | - | - |
| Processing auxiliary "h" | | | | | h-1 | | | | | | |
| (parts by weight) | - | - | - | - | 2.0 | - | - | - | - | - | - |
| Amount of formaldehyde emission dry (µg/cm²) | 0.14 | 0.17 | 0.14 | 0.25 | 0.22 | 0.23 | 0.23 | 0.03 | 0.07 | 0.04 | 0.03 |
| Amount of formaldehyde emission humid (µg/cm²) | 0.13 | 0.19 | 0.12 | 0.22 | 0.20 | 0.24 | 0.25 | 0.06 | 0.08 | 0.08 | 0.07 |

**Table 2**

| | Examples | | | | | | | | | | |
|---|---|---|---|---|---|---|---|---|---|---|---|
| | 12 | 13 | 14 | 15 | 16 | 17 | 18 | 19 | 20 | 21 | 22 |
| Polyacetal copolymer "a" | a-1 | a-2 | a-2 | a-2 | a-2 | a-3 | a-3 | a-3 | a-3 | a-4 | a-5 |
| (parts by weight) | 100 | 100 | 100 | 100 | 100 | 100 | 100 | 100 | 100 | 100 | 100 |
| Formaldehyde emission | b-9 | b-10 | b-11 | b-12 | b-13 | b-1 | b-2 | b-5 | b-10 | b-1 | b-2 |
| inhibitor "b" (parts by weight) | 0.3 | 0.1 | 0.3 | 0.3 | 0.1 | 1.0 | 0.3 | 0.1 | 0.2 | 1.0 | 0.3 |
| Antioxidant "c" | c-1 | c-1 | c-3 | c-1 | c-1 | c-1 | c-1 | c-3 | c-3 | c-1 | - |
| (parts by weight) | 0.3 | 0.3 | 0.3 | 0.3 | 0.5 | 0.3 | 0.3 | 0.3 | 0.3 | 0.3 | |
| Processing stabilizer "d" | d-3 | d-1 | d-1 | d-1 | d-2 | d-1 | d-2 | d-2 | d-1 | d-2 | - |
| (parts by weight) | 0.2 | 0.2 | 0.2 | 0.2 | 0.2 | 0.2 | 0.2 | 0.2 | 0.2 | 0.2 | |
| Heat stabilizer "e" | e-1 | e-4 | e-1 | e-4 | - | e-2 | e-2 | e-3 | e-4 | e-5 | e-6 |
| (parts by weight) | 0.03 | 0.03 | 0.03 | 0.03 | | 0.03 | 0.03 | 0.03 | 0.03 | 0.05 | 0.05 |
| Coloring agent "f" (parts by weight) | - | - | - | - | - | - | - | - | - | - | - |
| Weather (light)-resistant stabilizer "g" (parts by weight) | - | - | - | - | - | - | - | - | - | - | - |
| Processing auxiliary "h" (parts by weight) | - | - | - | - | - | - | - | - | - | - | - |
| Amount of formaldehyde emission dry (µg/cm²) | 0.04 | 0.04 | 0.02 | 0.03 | 2.72 | 0.14 | 0.17 | 0.02 | 0.02 | 0.14 | 0.23 |
| Amount of formaldehyde emission humid (µg/cm²) | 0.08 | 0.08 | 0.06 | 0.07 | 0.33 | 0.14 | 0.19 | 0.06 | 0.05 | 0.17 | 0.07 |

**Table 3**

| | Examples | | | | | | | | | | | | | | |
|---|---|---|---|---|---|---|---|---|---|---|---|---|---|---|---|
| | 23 | 24 | 25 | 26 | 27 | | 28 | 29 | | 30 | | 31 | | 32 | |
| Polyacetal copolymer "a" | a-5 | a-5 | a-6 | a-6 | a-2 | | a-2 | a-2 | | a-2 | | a-2 | | a-2 | |
| (parts by weight) | 100 | 100 | 100 | 100 | 100 | | 100 | 100 | | 100 | | 100 | | 100 | |
| Formaldehyde emission | b-5 | b-14 | b-1 | b-5 | b-1 | b-10 | b-1 | b-1 | | b-2 | | b-5 | | b-10 | |
| inhibitor "b" (parts by weight) | 0.05 | 0.50 | 0.3 | 0.10 | 0.5 | 0.05 | 1.0 | 1.0 | | 0.3 | | 0.2 | | 0.3 | |
| Antioxidant "c" | - | - | - | - | c-1 | | c-1 | c-1 | | c-1 | | c-1 | | c-1 | |
| (parts by weight) | | | | | 0.3 | | 0.3 | 0.03 | | 0.03 | | 0.03 | | 0.03 | |
| Processing stabilizer "d" | - | - | - | - | d-1 | | d-1 | d-2 | | d-1 | | d-1 | | d-1 | |
| (parts by weight) | | | | | 0.2 | | 0.2 | 0.2 | | 0.2 | | 0.2 | | 0.2 | |
| Heat stabilizer "e" | - | - | - | - | e-1 | | e-1 | e-1 | | e-1 | | e-3 | | e-4 | |
| (parts by weight) | | | | | 0.1 | | 0.1 | 0.1 | | 0.1 | | 0.03 | | 0.03 | |
| Coloring agent "f" | - | - | - | - | - | | f-1 | - | | - | | - | | f-2 | |
| (parts by weight) | | | | | | | 0.5 | | | | | | | 0.5 | |
| Weather (light)-resistant | - | - | - | - | - | | - | g-1 | g-2 | g-1 | g-2 | g-1 | g-2 | g-1 g-2 | |
| stabilizer "g" (parts by weight) | | | | | | | | 0.4 | 0.2 | 0.4 | 0.2 | 0.4 | 0.2 | 0.4 0.2 | |
| Processing auxiliary "h" (parts by weight) | - | - | - | - | - | | - | - | | - | | - | | - | |
| Amount of formaldehyde emission dry (µg/cm²) | 0.03 | 0.05 | 0.24 | 0.02 | 0.13 | | 0.18 | 0.32 | | 0.38 | | 0.03 | | 0.06 | |
| Amount of formaldehyde emission humid (µg/cm²) | 0.04 | 0.08 | 0.06 | 0.05 | 0.10 | | 0.19 | 0.27 | | 0.39 | | 0.07 | | 0.08 | |

**Table 4**

| | Comparative Examples | | | | | | | | |
|---|---|---|---|---|---|---|---|---|---|
| | 1 | 2 | 3 | | 4 | 5 | 6 | 7 | 8 |
| Polyacetal copolymer "a" | a-1 | a-2 | a-2 | | a-7 | a-7 | a-7 | a-7 | a-7 |
| (parts by weight) | 100 | 100 | 100 | | 100 | 100 | 100 | 100 | 100 |
| Formaldehyde emission inhibitor "b" | - | - | - | | - | b-1 | b-7 | b-10 | b-2 |
| (parts by weight) | | | | | | 1.0 | 0.2 | 0.3 | 0.3 |
| Antioxidant "c" | c-1 | c-1 | c-1 | | - | - | - | - | c-1 |
| (parts by weight) | 0.3 | 0.3 | 0.03 | | | | | | 0.03 |
| Processing stabilizer "d" | d-1 | d-1 | d-1 | | - | - | - | - | - |
| (parts by weight) | 0.2 | 0.2 | 0.2 | | | | | | |
| Heat stabilizer "e" | e-1 | e-1 | e-1 | | - | - | - | - | - |
| (parts by weight) | 0.1 | 0.1 | 0.1 | | | | | | |
| Coloring agent "f" (parts by weight) | - | - | - | | - | - | - | - | - |
| Weather (light)-resistant stabilizer "g" (parts by weight) | - | - | g-1 | g-2 | - | - | - | - | - |
| | | | 0.4 | 0.2 | | | | | |
| Processing auxiliary "h" (parts by weight) | - | - | - | | - | - | - | - | - |
| Amount of formaldehyde emission dry (µg/cm²) | 4.00 | 2.80 | 2.54 | | 9.74 | 2.37 | 5.14 | 4.30 | 1.09 |
| Amount of formaldehyde emission humid (µg/cm²) | 1.58 | 1.35 | 2.30 | | 3.29 | 1.76 | 4.60 | 5.32 | 1.68 |

It is apparent from Tables that as compared with the amount of formaldehyde emission from the resin compositions of Comparative Examples, that from the resin compositions according to Examples is considerably decreased or reduced, and the circumferential environment can be drastically improved. Moreover, in the case of using the urea compound or the hydrazide-series compound, the shorter the residence time in the extruder is, the smaller the amount of formaldehyde emission is.

## Claims

1. A polyacetal resin composition comprising a polyacetal copolymer, a formaldehyde emission inhibitor, an antioxidant, a processing stabilizer and a heat stabilizer,
wherein
(i) the polyacetal copolymer has a terminal hemiformal group of not more than 1 mmol/kg, a terminal formyl group of not more than 2 mmol/kg, and a melt index of 0.1 to 100 g/10 min,
(ii) the antioxidant comprises at least one member selected from the group consisting of a hindered phenol-series compound and a hindered amine-series compound, and the proportion of the antioxidant is 0.001 to 5 parts by weight relative to 100 parts by weight of the polyacetal copolymer,
(iii) the processing stabilizer comprises at least one member selected from the group consisting of a long-chain fatty acid or a derivative thereof, a polyoxyalkylene glycol, and a silicone-series compound, and the proportion of the processing stabilizer is 0.001 to 10 parts by weight relative to 100 parts by weight of the polyacetal copolymer,
(iv) the heat stabilizer comprises at least one member selected from the group consisting of a phosphine-series compound, an organic carboxylic acid or a metal salt thereof, an alkaline or alkaline earth metal compound, a hydrotalcite and a zeolite, and the proportion of the heat stabilizer is 0.001 to 10 parts by weight relative to 100 parts by weight of the polyacetal copolymer.

2. A polyacetal resin composition according to claim 1, wherein the molar ratio of the terminal hemiformal group relative to the terminal formyl group is 100/0 to 5/95.

3. A polyacetal resin composition according to claim 1, wherein the polyacetal copolymer further has an unstable terminal group of not more than 0.5% by weight.

4. A polyacetal resin composition according to claim 1, wherein the polyacetal copolymer has the terminal hemiformal group of 0.05 to 0.8 mmol/kg, the terminal formyl group of 0 to 1.5 mmol/kg, the molar ratio of the terminal hemiformal group relative to the terminal formyl group of 100/0 to 10/90, an unstable terminal group of 0.01 to 0.4% by weight, and the melt index of 0.5 to 80 g/10 min.

5. A polyacetal resin composition according to claim 1, wherein the formaldehyde emission inhibitor comprises at least one compound having an active hydrogen atom and selected from the group consisting of a basic nitrogen-containing compound, an active methylene group-containing compound, and a polyphenol compound.

6. A polyacetal resin composition according to claim 1, wherein the formaldehyde emission inhibitor comprises at least one basic nitrogen-containing compound selected from the group consisting of an aminotriazine compound, a guanidine compound, a urea compound, a hydrazine compound, an amino acid compound, an amino alcohol compound, an imide compound, and an amide compound.

7. A polyacetal resin composition according to claim 1, wherein the formaldehyde emission inhibitor comprises at least one basic nitrogen-containing compound selected from the group consisting of a guanamine-series compound, a linear urea compound, a cyclic urea compound, a carboxylic acid hydrazide-series compound, an α-, β-, γ-, or δ- amino acid, a polyamide-series resin, and a poly(meth)acrylic acid amide-series resin.

8. A polyacetal resin composition according to claim 1, wherein the formaldehyde emission inhibitor comprises
at least one member selected from the group consisting of a guanamine-series compound, a linear urea compound, a cyclic urea compound, and a carboxylic acid hydrazide-series compound, and
at least one member selected from the group consisting of a polyamide-series resin and a poly (meth) acrylic acid amide-series resin.

9. A polyacetal resin composition according to claim 1, wherein the proportion of the formaldehyde emission inhibitor is 0.001 to 20 parts by weight relative to 100 parts by weight of the polyacetal copolymer.

10. A polyacetal resin composition according to claim 1, which further comprises a weather-resistant stabilizer.

11. A polyacetal resin composition according to claim 10, wherein the weather-resistant stabilizer comprises at least one member selected from the group consisting of a benzotriazole-series compound, a benzophenone-series compound, an aromatic benzoate-series compound, a cyanoacrylate-series compound, an oxalic anilide-series compound, a hydroxyphenyl-1,3,5-triazine-series compound, and a hindered amine-series compound.

12. A polyacetal resin composition according to claim 1, wherein the polyacetal copolymer is a copolymer which has contained at least one member selected from the group consisting of a basic nitrogen-containing compound, a hindered phenol-series compound, a hindered amine-series compound, a processing stabilizer, and a heat stabilizer.

13. A polyacetal resin composition according to claim 1, wherein
the polyacetal copolymer has the terminal hemiformal group of not more than 0.8 mmol/kg, the terminal formyl group of not more than 1.5 mmol/kg, the unstable terminal group of not more than 0.4% by weight and the melt index of 0.5 to 80 g/10 min.,
relative to 100 parts by weight of the polyacetal copolymer, the proportion of the formaldehyde emission inhibitor is 0.01 to 10 parts by weight, the proportion of the antioxidant is 0.005 to 3 parts by weight, the proportion of the processing stabilizer is 0.01 to 5 parts by weight and the proportion of the heat stabilizer is 0.001 to 5 parts by weight.

14. A polyacetal resin composition according to claim 1, wherein
the polyacetal copolymer has the terminal hemiformal group of not more than 0.6 mmol/kg, the terminal formyl group of not more than 1.0 mmol/kg, the unstable terminal group of not more than 0.3% by weight and the melt index of 1.0 to 60 g/10 min.,
relative to 100 parts by weight of the polyacetal copolymer, the proportion of the formaldehyde emission inhibitor is 0.02 to 5 parts by weight, the proportion of the antioxidant is 0.01 to 2 parts by weight, the proportion of the processing stabilizer is 0.03 to 3 parts by weight and the proportion of the heat stabilizer is 0.01 to 2 parts by weight.

15. A polyacetal resin composition according to claim 1, wherein
the polyacetal copolymer has the terminal hemiformal group of not more than 0.5 mmol/kg, the terminal formyl group of not more than 0.8 mmol/kg, the unstable terminal group of not more than 0.25% by weight and the melt index of 1.0 to 50 g/10 min.,
relative to 100 parts by weight of the polyacetal copolymer, the proportion of the formaldehyde emission inhibitor is 0.02 to 2 parts by weight, the proportion of the antioxidant is 0.01 to 2 parts by weight, the proportion of the processing stabilizer is 0.03 to 3 parts by weight and the proportion of the heat stabilizer is 0.01 to 2 parts by weight.

16. A polyacetal resin composition according to claim 1, which further comprises at least one member selected from the group consisting of an impact resistance improver or a gloss reducing agent, an agent for improving sliding property, a coloring agent, and a filler.

17. A polyacetal resin composition according to claim 16, wherein the impact resistance improver or the gloss reducing agent comprises at least one member selected from the group consisting of a thermoplastic polyester, a thermoplastic polyurethane, and an acrylic core-shell polymer.

18. A polyacetal resin composition according to claim 16, wherein the agent for improving sliding property comprises at least one member selected from the group consisting of an olefinic polymer, a silicone-series resin, and a fluorine-containing resin.

19. A polyacetal resin composition according to claim 1, wherein a pellet of the polyacetal copolymer coexists with the formaldehyde emission inhibitor or a master batch containing the formaldehyde emission inhibitor.

20. A process for producing the polyacetal resin composition according to claim 1, which comprises mixing a polyacetal copolymer recited in claim 1 with a formaldehyde emission inhibitor, an antioxidants, a processing stabiliser and a heat stabiliser.

21. A process according to claim 20, wherein the polyacetal copolymer recited in claim 1, the formaldehyde emission inhibitor, the antioxidant, the processing stabilizer and the heat stabilizer are melt-mixed by using an extruder having an exhaust port, and in the melt-mixing process, at least one processing auxiliary selected from the group consisting of water and an alcohol is added to the mixture and a volatile component is exhausted through the exhaust port.

22. A process according to claim 20, wherein the polyacetal copolymer recited in claim 1, the formaldehyde emission inhibitor, the antioxidant, the processing stabilizer and the heat stabilizer are melt-mixed by using an extruder having an exhaust port, and in the melt-mixing step, part or all of the formaldehyde emission inhibitor is fed to the middle part of the extruder.

23. A process according to claim 20, which comprises melt-mixing the polyacetal copolymer recited in claim 1 and at least one formaldehyde emission inhibitor selected from the group consisting of a urea compound and a hydrazide-series compound by using an extruder, and the melt-mixing time is not more than 300 seconds.

24. A shaped article of a polyacetal resin formed from a polyacetal resin composition recited in claim 1.

25. A shaped article of a polyacetal resin according to claim 24, wherein (1) the emission of formaldehyde from the shaped article which is maintained in a closed space for 24 hours at a temperature of 80°C is not more than 0.1 µg per one cm² of the surface area of the article, and/or (2) the emission of formaldehyde from the shaped article which is maintained in a closed space for 3 hours at a temperature of 60 °C under a saturated humidity is not more than 0.2 µg per one cm² of the surface area of the article.

26. A shaped article of a polyacetal resin according to claim 24, wherein (1) the emission of formaldehyde from the shaped article which is maintained in a closed space for 24 hours at a temperature of 80 °C is 0.005 to 0.09 µg per one cm² of the surface area of the article, and/or (2) the emission of formaldehyde from the shaped article which is maintained in a closed space for 3 hours at a temperature of 60 °C under a saturated humidity is 0.005 to 0.1 µg per one cm² of the surface area of the article.

27. A shaped article of a polyacetal resin according to claim 24, which is at least one article selected from the group consisting of an automotive part, an electric or electronic device part, an architectural or pipeline part, a household utensil or cosmetic article part, and a medical device part.

## Patentansprüche

1. Polyacetalharz-Zusammensetzung, umfassend ein Polyacetal-Copolymer, einen Inhibitor der Emission von Formaldehyd, ein Antioxidans, einen Verarbeitungsstabilisator und einen Wärmestabilisator,
wobei
(i) das Polyacetal-Copolymer nicht mehr als 1 mmol/kg einer terminalen Hemiformalgruppe, nicht mehr als 2 mmol/kg einer terminalen Formylgruppe und einen Schmelzindex von 0,1 bis 100 g/10 min hat,
(ii) das Antioxidans wenigstens ein Element umfasst, das aus der aus einer gehinderten Verbindung der Phenolreihe und einer gehinderten Verbindung der Aminreihe bestehenden Gruppe ausgewählt ist und der Anteil des Antioxidans 0,001 bis 5 Gew.-Teile, bezogen auf 100 Gew.-Teile des Polyacetal-Copolymers, beträgt,
(iii) der Verarbeitungsstabilisator wenigstens ein Element umfasst, das aus der aus einer langkettigen Fettsäure oder einem Derivat davon, einem Polyoxyalkylenglycol und einer Verbindung der Siliconreihe bestehenden Gruppe ausgewählt ist und der Anteil des Verarbeitungsstabilisators 0,001 bis 10 Gew.-Teile, bezogen auf 100 Gew.-Teile des Polyacetal-Copolymers, beträgt,
(iv) der Wärmestabilisator wenigstens ein Element umfasst, das aus der aus einer Verbindung der Phosphinreihe, einer organischen Carbonsäure oder einem Metallsalz davon, einer Alkali- oder Erdalkalimetallverbindung, einem Hydrotalkit und einem Zeolith bestehenden Gruppe ausgewählt ist und der Anteil des Wärmestabilisators 0,001 bis 10 Gew.-Teile, bezogen auf 100 Gew.-Teile des Polyacetal-Copolymers, beträgt.

2. Polyacetalharz-Zusammensetzung nach Anspruch 1, wobei das Stoffmengenverhältnis der terminalen Hemiformalgruppe, bezogen auf die terminale Formylgruppe, 100/0 bis 5/95 beträgt.

3. Polyacetalharz-Zusammensetzung nach Anspruch 1, wobei das Polyacetal-Copolymer weiterhin nicht mehr als 0,5 Gew.-% einer instabilen terminalen Gruppe aufweist.

4. Polyacetalharz-Zusammensetzung nach Anspruch 1, wobei das Polyacetal-Copolymer 0,05 bis 0,8 mmol/kg der terminalen Hemiformalgruppe, 0 bis 1,5 mmol/kg der terminalen Formylgruppe, ein Stoffmengenverhältnis der terminalen Hemiformalgruppe in Bezug auf die terminale Formylgruppe von 100/0 bis 10/90, von 0,01 bis 0,4 Gew.-% einer instabilen terminalen Gruppe und einen Schmelzindex von 0,5 bis 80 g/10 min aufweist.

5. Polyacetalharz-Zusammensetzung nach Anspruch 1, wobei der Inhibitor der Emission von Formaldehyd wenigstens eine Verbindung mit einem aktiven Wasserstoffatom umfasst, die aus der aus einer basischen, stickstoffhaltigen Verbindung, einer eine aktive Methylengruppe enthaltenden Verbindung und einer Polyphenolverbindung bestehenden Gruppe ausgewählt ist.

6. Polyacetalharz-Zusammensetzung nach Anspruch 1, wobei der Inhibitor der Emission von Formaldehyd wenigstens eine basische, stickstoffhaltige Verbindung enthält, die aus der aus einer Aminotriazin-Verbindung, einer Guanidinverbindung, einer Harnstoffverbindung, einer Hydrazinverbindung, einer Aminosäure-Verbindung, einer Aminoalkohol-Verbindung, einer Imidverbindung und einer Amidverbindung bestehenden Gruppe ausgewählt ist.

7. Polyacetalharz-Zusammensetzung nach Anspruch 1, wobei der Inhibitor der Emission von Formaldehyd wenigstens eine basische, stickstoffhaltige Verbindung enthält, die aus der aus einer Verbindung der Guanamin-Reihe, einer linearen Harnstoffverbindung, einer cyclischen Harnstoffverbindung, einer Verbindung der Carbonsäurehydrazid-Reihe, einer α-, β-, γ- oder δ-Aminosäure, einem Harz der Polyamid-Reihe und einem Harz der Poly(meth)acrylsäureamid-Reihe bestehenden Gruppe ausgewählt ist.

8. Polyacetalharz-Zusammensetzung nach Anspruch 1, wobei der Inhibitor der Emission von Formaldehyd Folgendes umfasst:
wenigstens ein aus der aus einer Verbindung der Guanamin-Reihe, einer linearen Harnstoffverbindung, einer cyclischen Harnstoffverbindung und einer Verbindung der Carbonsäurehydrazid-Reihe bestehenden Gruppe ausgewähltes Element und
wenigstens ein aus der aus einem Harz der Polyamidreihe und einem Harz der Poly(meth)acrylsäureamid-Reihe bestehenden Gruppe ausgewähltes Element.

9. Polyacetalharz-Zusammensetzung nach Anspruch 1, wobei der Anteil des Inhibitors der Emission von Formaldehyd 0,001 bis 20 Gew.-Teile, bezogen auf 100 Gew.-Teile des Polyacetal-Copolymers, beträgt.

10. Polyacetalharz-Zusammensetzung nach Anspruch 1, die weiterhin einen witterungsbeständigen Stabilisator umfasst.

11. Polyacetalharz-Zusammensetzung nach Anspruch 10, wobei der witterungsbeständige Stabilisator wenigstens ein Element umfasst, das aus der aus einer Verbindung der Benzotriazol-Reihe, einer Verbindung der Benzophenon-Reihe, einer aromatischen Verbindung der Benzoatreihe, einer Verbindung der Cyanacrylat-Reihe, einer Verbindung der Oxalsäureanilid-Reihe, einer Verbindung der Hydroxyphenyl-1,3,5-triazin-Reihe und einer gehinderten Verbindung der Aminreihe bestehenden Gruppe ausgewählt ist.

12. Polyacetalharz-Zusammensetzung nach Anspruch 1, wobei das Polyacetal-Copolymer ein Copolymer ist, das wenigstens ein Element enthält, das aus der aus einer basischen, stickstoffhaltigen Verbindung, einer gehinderten Verbindung der Phenolreihe, einer gehinderten Verbindung der Aminreihe, einem Verarbeitungsstabilisator und einem Wärmestabilisator bestehenden Gruppe ausgewählt ist.

13. Polyacetalharz-Zusammensetzung nach Anspruch 1, wobei
das Polyacetal-Copolymer nicht mehr als 0,8 mmol/kg der terminalen Hemiformalgruppe, nicht mehr als 1,5 mmol/kg der terminalen Formylgruppe, nicht mehr als 0,4 Gew.-% der Instabilen terminalen Gruppe und einen Schmelzindex von 0,5 bis 80 g/10 min aufweist,
bezogen auf 100 Gew.-Telle des Polyacetal-Copolymers der Anteil des Inhibitors der Emission von Formaldehyd 0,01 bis 10 Gew.-Teile, der Anteil des Antioxidans 0,005 bis 3 Gew.-Teile, der Anteil des Verarbeitungsstabilisators 0,01 bis 5 Gew.-Teile und der Anteil des Wärmestabilisators 0,001 bis 5 Gew.-Teile beträgt.

14. Polyacetalharz-Zusammensetzung nach Anspruch 1, wobei
das Polyacetal-Copolymer nicht mehr als 0,6 mmol/kg der terminalen Hemiformalgruppe, nicht mehr als 1,0 mmol/kg der terminalen Formylgruppe, nicht mehr als 0,3 Gew.-% der instabilen terminalen Gruppe und einen Schmelzindex von 1,0 bis 60 kg/10 min aufweist,
bezogen auf 100 Gew.-Teile des Polyacetal-Copolymers der Anteil des Inhibitors der Emission von Formaldehyd 0,02 bis 5 Gew.-Teile, der Anteil des Antioxidans 0,01 bis 2 Gew.-Telle, der Anteil des Verarbeitungsstabilisators 0,03 bis 3 Gew.-Teile und der Anteil des Wärmestabilisators 0,01 bis 2 Gew.-Teile beträgt.

15. Polyacetalharz-Zusammensetzung nach Anspruch 1, wobei
das Polyacetal-Copolymer nicht mehr als 0,5 mmol/kg der terminalen Hemiformalgruppe, nicht mehr als 0,8 mmol/kg der terminalen Formylgruppe, nicht mehr als 0,25 Gew.-% der instabilen terminalen Gruppe und einen Schmelzindex von 1,0 bis 50 g/10 min aufweist,
bezogen auf 100 Gew.-Teile des Polyacetal-Copolymers der Anteil des Inhibitors der Emission von Formaldehyd 0,02 bis 2 Gew.-Teile, der Anteil des Antioxidans 0,01 bis 2 Gew.-Teile, der Anteil des Verarbeitungsstabilisators 0,03 bis 3 Gew.-Teile und der Anteil des Wärmestabilisators 0,01 bis 2 Gew.-Teile beträgt.

16. Polyacetalharz-Zusammensetzung nach Anspruch 1, die weiterhin wenigstens ein Element umfasst, das aus der aus einem Schlagfestmacher oder einem glanzvermindernden Mittel, einem Mittel zur Verbesserung der Gleiteigenschaft, einem farbgebenden Mittel und einem Füllmittel bestehenden Gruppe ausgewählt ist.

17. Polyacetalharz-Zusammensetzung nach Anspruch 16, wobei der Schlagfestmacher oder das glanzvermindernde Mittel wenigstens ein Element umfasst, das aus der aus einem thermoplastischen Polyester, einem thermoplastischen Polyurethan und einem Kern-Schale-Acrylpolymer bestehenden Gruppe ausgewählt ist.

18. Polyacetalharz-Zusammensetzung nach Anspruch 16, wobei das Mittel zur Verbesserung der Gleiteigenschaft wenigstens ein Element umfasst, das aus der aus einem olefinischen Polymer, einem Harz der Siliconreihe und einem fluorhaltigen Harz bestehenden Gruppe ausgewählt ist.

19. Polyacetalharz-Zusammensetzung nach Anspruch 1, wobei ein Pellet des Polyacetal-Copolymers gleichzeitig mit dem Inhibitor der Emission von Formaldehyd oder einem den Inhibitor der Emission von Formaldehyd enthaltenden Masterbatch vorliegt.

20. Verfahren zur Herstellung der Polyacetalharz-Zusammensetzung nach Anspruch 1, umfassend das Vermischen eines in Anspruch 1 aufgeführten Polyacetal-Copolymers mit einem Inhibitor der Emission von Formaldehyd, einem Antioxidans, einem Verarbeitungsstabilisator und einem Wärmestabilisator.

21. Verfahren nach Anspruch 20, wobei das in Anspruch 1 aufgeführte Polyacetal-Copolymer, der Inhibitor der Emission von Formaldehyd, das Antioxidans, der Verarbeitungsstabilisator und der Wärmestabilisator unter Verwendung eines Extruders mit einer Auslassöffnung schmelzvermischt werden und beim Schmelzmischverfahren wenigstens ein aus der aus Wasser und einem Alkohol bestehenden Gruppe ausgewähltes Verarbeitungshilfsmittel zur Mischung gegeben wird und eine flüchtige Komponente durch die Auslassöffnung abgelassen wird.

22. Verfahren nach Anspruch 20, wobei das in Anspruch 1 aufgeführte Polyacetal-Copolymer, der Inhibitor der Emission von Formaldehyd, das Antioxidans, der Verarbeitungsstabilisator und der Wärmestabilisator unter Verwendung eines Extruders mit einer Auslassöffnung schmelzvermischt werden und beim Schmelzmischschritt ein Teil des Inhibitors der Emission von Formaldehyd oder der gesamte Inhibitor der Emission von Formaldehyd dem mittleren Teil des Extruders zugeführt wird.

23. Verfahren nach Anspruch 20, umfassend das Schmelzvermischen des in Anspruch 1 aufgeführten Polyacetal-Copolymers und wenigstens eines aus der aus einer Harnstoffverbindung und einer Verbindung der Hydrazidreihe bestehenden Gruppe ausgewählten Inhibitors der Emission von Formaldehyd unter Verwendung eines Extruders und wobei die Schmelzmischdauer nicht mehr als 300 s beträgt.

24. Formteil aus einem Polyacetalharz, das aus einer in Anspruch 1 aufgeführten Polyacetalharz-Zusammensetzung besteht.

25. Formteil aus einem Polyacetalharz nach Anspruch 24, wobei (1) die Emission von Formaldehyd aus dem Formteil, das 24 h lang bei einer Temperatur von 80 °C in einem geschlossenen Raum gehalten wird, nicht mehr als 0,1 µg/cm² der Oberfläche des Teils beträgt und/oder (2) die Emission von Formaldehyd aus dem Formteil, das 3 h lang bei einer Temperatur von 60 °C bei einer Sättigungsfeuchtigkeit in einem geschlossenen Raum gehalten wird, nicht mehr als 0,2 µg/cm² der Oberfläche des Teils beträgt.

26. Formteil aus einem Polyacetalharz nach Anspruch 24, wobei (1) die Emission von Formaldehyd aus dem Formteil, das 24 h lang bei einer Temperatur von 80 °C in einem geschlossenen Raum gehalten wird, 0,005 bis 0,09 µg/cm² der Oberfläche des Teils beträgt und/oder (2) die Emission von Formaldehyd aus dem Formteil, das 3 h lang bei einer Temperatur von 60 °C bei einer Sättigungsfeuchtigkeit in einem geschlossenen Raum gehalten wird, 0,005 bis 0,1 µg/cm² der Oberfläche des Teils beträgt.

27. Formteil aus einem Polyacetalharz nach Anspruch 24, bei dem es sich um wenigstens einen Gegenstand handelt, der aus der aus Kraftfahrzeugteil, einem Teil einer elektrischen oder elektronischen Vorrichtung, einem Architektur- oder Pipeline-Tell, einem Haushaltsgerät oder einem Teil eines Kosmetikartikels und einem Teil einer medizinischen Vorrichtung bestehenden Gruppe ausgewählt ist.

## Revendications

1. Une composition de résine polyacétal comprenant un copolymère polyacétal, un inhibiteur d'émission de formaldéhyde, un antioxydant, un stabilisant de transformation et un stabilisant à la chaleur,
dans laquelle
(i) le copolymère polyacétal a une teneur en groupe hémiformal terminal d'au plus 1 mmol/kg, une teneur en groupe formyle terminal d'au plus 2 mmol/kg et un indice de fluidité à chaud de 0,1 à 100 g/10 min,
(ii) l'antioxydant comprend au moins un membre du groupe formé par un composé de la série des phénols à empêchement stérique et un composé de la série des amines à empêchement stérique, et la proportion de l'antioxydant est de 0,001 à 5 parties en poids pour 100 parties en poids du copolymère polyacétal,
(iii) le stabilisant de transformation comprend au moins un membre du groupe formé par un acide gras à longue chaîne ou un dérivé de celui-ci, un polyoxyalkylène-glycol et un composé de la série des silicones, et la proportion du stabilisant de transformation est de 0,001 à 10 parties en poids pour 100 parties en poids du copolymère polyacétal,
(iv) le stabilisant à la chaleur comprend au moins un membre du groupe formé par un composé de la série des phosphines, un acide carboxylique organique ou un sel métallique de celui-ci, un composé de métal alcalin ou alcalino-terreux, une hydrotalcite et une zéolite, et la proportion du stabilisant à la chaleur est de 0,001 à 10 parties en poids pour 100 parties en poids du copolymère polyacétal.

2. Une composition de résine polyacétal selon la revendication 1, dans laquelle le rapport molaire du groupe hémiformal terminal au groupe formyle terminal est de 100/0 à 5/95.

3. Une composition de résine polyacétal selon la revendication 1, dans laquelle le copolymère polyacétal a en outre une teneur en groupes terminaux instables d'au plus 0,5 % en poids.

4. Une composition de résine polyacétal selon la revendication 1, dans laquelle le copolymère polyacétal a une teneur en groupe hémiformal terminal de 0,05 à 0,8 mmol/kg, une teneur en groupe formyle terminal de 0 à 1,5 mmol/kg, un rapport molaire du groupe hémiformal terminal au groupe formyle terminal de 100/0 à 10/90, une teneur en groupes terminaux instables de 0,01 à 0,4 % en poids, et un indice de fluidité à chaud de 0,5 à 80 g/10 min.

5. Une composition de résine polyacétal selon la revendication 1, dans laquelle l'inhibiteur d'émission de formaldéhyde comprend au moins un composé ayant un atome d'hydrogène actif et choisi dans le groupe formé par un composé azoté basique, un composé contenant un groupe méthylène actif et un composé du type polyphénol.

6. Une composition de résine polyacétal selon la revendication 1, dans laquelle l'inhibiteur d'émission de formaldéhyde comprend au moins un composé azoté basique choisi dans le groupe formé par un composé du type aminotriazine, un composé du type guanidine, un composé du type urée, un composé du type hydrazine, un composé du type amino-acide, un composé du type amino-alcool, un composé du type imide et un composé du type amide.

7. Une composition de résine polyacétal selon la revendication 1, dans laquelle l'inhibiteur d'émission de formaldéhyde comprend au moins un composé azoté basique choisi dans le groupe formé par un composé de la série des guanamines, un composé du type urée linéaire, un composé du type urée cyclique, un composé de la série des hydrazides d'acide carboxylique, un α-, β-, γ-, ou δ-amino-acide, une résine de la série des polyamides et une résine de la série des amides d'acide poly(méth)acrylique.

8. Une composition de résine polyacétal selon la revendication 1, dans laquelle l'inhibiteur d'émission de formaldéhyde comprend
au moins un membre du groupe formé par un composé de la série des guanamines, un composé du type urée linéaire, un composé du type urée cyclique et un composé de la série des hydrazides d'acide carboxylique, et
au moins un membre du groupe formé par une résine de la série des polyamides et une résine de la série des amides d'acide poly(méth)acrylique.

9. Une composition de résine polyacétal selon la revendication 1, dans laquelle la proportion de l'inhibiteur d'émission de formaldéhyde est de 0,001 à 20 parties en poids pour 100 parties en poids du copolymère polyacétal.

10. Une composition de résine polyacétal selon la revendication 1, qui comprend de plus un stabilisant de résistance aux agents atmosphériques.

11. Une composition de résine polyacétal selon la revendication 10, dans laquelle le stabilisant de résistance aux agents atmosphériques comprend au moins un membre du groupe formé par un composé de la série des benzotriazoles, un composé de la série des benzophénones, un composé de la série des benzoates aromatiques, un composé de la série des cyanoacrylates, un composé de la série des anilides oxaliques, un composé de la série des hydroxyphényl-1,3,5-triazines et un composé de la série des amines à empêchement stérique.

12. Une composition de résine polyacétal selon la revendication 1, dans laquelle le copolymère polyacétal est un copolymère qui a contenu au moins un membre du groupe formé par un composé azoté basique, un composé de la série des phénols à empêchement stérique, un composé de la série des amines à empêchement stérique, un stabilisant de transformation et un stabilisant à la chaleur.

13. Une composition de résine polyacétal selon la revendication 1, dans laquelle
le copolymère polyacétal a une teneur en groupe hémiformal terminal d'au plus 0,8 mmol/kg, une teneur en groupe formyle terminal d'au plus 1,5 mmol/kg, une teneur en groupes terminaux instables d'au plus 0,4 % en poids et un indice de fluidité à chaud de 0,5 à 80 g/10 min,
pour 100 parties en poids du copolymère polyacétal, la proportion de l'inhibiteur d'émission de formaldéhyde est de 0,01 à 10 parties en poids, la proportion de l'antioxydant est de 0,005 à 3 parties en poids, la proportion du stabilisant de transformation est de 0,01 à 5 parties en poids et la proportion du stabilisant à la chaleur est de 0,001 à 5 parties en poids.

14. Une composition de résine polyacétal selon la revendication 1, dans laquelle
le copolymère polyacétal a une teneur en groupe hémiformal terminal d'au plus 0,6 mmol/kg, une teneur en groupe formyle terminal d'au plus 1,0 mmol/kg, une teneur en groupes terminaux instables d'au plus 0,3 % en poids et un indice de fluidité à chaud de 1,0 à 60 g/10 min,
pour 100 parties en poids du copolymère polyacétal, la proportion de l'inhibiteur d'émission de formaldéhyde est de 0,02 à 5 parties en poids, la proportion de l'antioxydant est de 0,01 à 2 parties en poids, la proportion du stabilisant de transformation est de 0,03 à 3 parties en poids et la proportion du stabilisant à la chaleur est de 0,01 à 2 parties en poids.

15. Une composition de résine polyacétal selon la revendication 1, dans laquelle
le copolymère polyacétal a une teneur en groupe hémiformal terminal d'au plus 0,5 mmol/kg, une teneur en groupe formyle terminal d'au plus 0,8 mmol/kg, une teneur en groupes terminaux instables d'au plus 0,25 % en poids et un indice de fluidité à chaud de 1,0 à 50 g/10 min,
pour 100 parties en poids du copolymère polyacétal, la proportion de l'inhibiteur d'émission de formaldéhyde est de 0,02 à 2 parties en poids, la proportion de l'antioxydant est de 0,01 à 2 parties en poids, la proportion du stabilisant de transformation est de 0,03 à 3 parties en poids et la proportion du stabilisant à la chaleur est de 0,01 à 2 parties en poids.

16. Une composition de résine polyacétal selon la revendication 1, qui comprend de plus au moins un membre du groupe formé par un agent améliorant la résistance au choc ou un agent réduisant le brillant, un agent pour améliorer la propriété de glissement, un agent colorant et une charge.

17. Une composition de résine polyacétal selon la revendication 16, dans laquelle l'agent améliorant la résistance au choc ou l'agent réduisant le brillant comprend au moins un membre du groupe formé par un polyester thermoplastique, un polyuréthanne thermoplastique et un polymère acrylique à noyau-enveloppe.

18. Une composition de résine polyacétal selon la revendication 16, dans laquelle l'agent améliorant la propriété de glissement comprend au moins un membre du groupe formé par un polymère oléfinique, une résine de la série des silicones et une résine fluorée.

19. Une composition de résine polyacétal selon la revendication 1, dans laquelle un granulé du copolymère polyacétal coexiste avec l'inhibiteur d'émission de formaldéhyde ou un mélange maître contenant l'inhibiteur d'émission de formaldéhyde.

20. Un procédé de production de la composition de résine polyacétal selon la revendication 1, qui comprend le mélange d'un copolymère polyacétal spécifié dans la revendication 1 avec un inhibiteur d'émission de formaldéhyde, un antioxydant, un stabilisant de transformation et un stabilisant à la chaleur.

21. Un procédé selon la revendication 20, dans lequel le copolymère polyacétal spécifié dans la revendication 1, l'inhibiteur d'émission de formaldéhyde, l'antioxydant, le stabilisant de transformation et le stabilisant à la chaleur sont mélangés à l'état fondu en utilisant une extrudeuse ayant un orifice d'échappement, et, dans l'opération de mélange à l'état fondu, au moins un auxiliaire de transformation choisi dans le groupe formé par l'eau et un alcool est ajouté au mélange et un composant volatil est évacué par l'orifice d'échappement.

22. Un procédé selon la revendication 20, dans lequel le copolymère polyacétal spécifié dans la revendication 1, l'inhibiteur d'émission de formaldéhyde, l'antioxydant, te stabilisant de transformation et le stabilisant à la chaleur sont mélangés à l'état fondu en utilisant une extrudeuse ayant un orifice d'échappement, et, dans l'étape de mélange à l'état fondu, une partie ou la totalité de l'inhibiteur d'émission de formaldéhyde est introduite dans la partie médiane de l'extrudeuse.

23. Un procédé selon la revendication 20, qui comprend le mélange à l'état fondu du copolymère polyacétal spécifié dans la revendication 1 et d'au moins un inhibiteur d'émission de formaldéhyde choisi dans le groupe formé par un composé du type urée et un composé de la série des hydrazides en utilisant une extrudeuse, et le temps de mélange à l'état fondu ne dépasse pas 300 secondes.

24. Un article façonné d'une résine polyacétal formé à partir d'une composition de résine polyacétal spécifiée dans la revendication 1.

25. Un article façonné d'une résine polyacétal selon la revendication 24, dans lequel (1) l'émission de formaldéhyde par l'article façonné qui est maintenu dans un espace fermé pendant 24 heures à une température de 80°C est d'au plus 0,1 µg par cm² de la surface de l'article, et/ou (2) l'émission de formaldéhyde par l'article façonné qui est maintenu dans un espace fermé pendant 3 heures à une température de 60°C sous une humidité saturée est d'au plus 0,2 µg par cm² de la surface de l'article.

26. Un article façonné d'une résine polyacétal selon la revendication 24, dans lequel (1) l'émission de formaldéhyde par l'article façonné qui est maintenu dans un espace fermé pendant 24 heures à une température de 80°C est de 0,005 à 0,09 µg par cm² de la surface de l'article, et/ou (2) l'émission de formaldéhyde par l'article façonné qui est maintenu dans un espace fermé pendant 3 heures à une température de 60°C sous une humidité saturée est de 0,005 à 0,1 µg par cm² de la surface de l'article.

27. Un article façonné d'une résine polyacétal selon la revendication 24, qui est au moins un article choisi dans le groupe formé par une pièce d'automobile, une pièce de dispositif électrique ou électronique, une pièce d'architecture ou de canalisation, un ustensile ménager ou une pièce d'article cosmétique, et une pièce de dispositif médical.
